(19) **Europäisches Patentamt**
European Patent Office
Office européen des brevets

(11) **EP 2 224 211 A1**

(12) **EUROPÄISCHE PATENTANMELDUNG**

(43) Veröffentlichungstag:
**01.09.2010 Patentblatt 2010/35**

(51) Int Cl.:
*G01C 21/34* *(2006.01)*     *G08G 1/0968* *(2006.01)*

(21) Anmeldenummer: **10153405.5**

(22) Anmeldetag: **12.02.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.02.2009   DE 102009010382**
**02.02.2010   DE 102010006702**

(71) Anmelder: **Navigon AG**
**20251 Hamburg (DE)**

(72) Erfinder:
• **Katzer, Jochen**
**91605, Gallmersgarten (DE)**
• **Mühlfelder, Mathias**
**97082, Würzburg (DE)**

(74) Vertreter: **von den Steinen, Axel**
**Advotec.**
**Patent- und Rechtsanwälte**
**Beethovenstrasse 5**
**97080 Würzburg (DE)**

(54) **Verfahren und Vorrichtung zur Berechnung alternativer Routen in einem Navigationssystem**

(57)     Die Erfindung betrifft eine Vorrichtung (40) und ein Verfahren zur Navigation eines Fahrzeugs entlang einer Route (25) von einer Startposition oder einer momentanen Position (02) zu einer Zielposition (03). Hierzu berechnet eine Routenberechnungseinrichtung (42) der Navigationsvorrichtung (40) einen Routenverlauf (04, 10, 12), der sich als Sequenz mehrerer zusammenhängender, auf einer digitalen Karte (01) einer Speichereinrichtung (52) gespeicherter Strecken zusammensetzt, als eine erste Route (04), und berechnet des weiteren zumindest eine Alternativroute (10, 12) durch Belegung von zumindest einer Strecke der ersten Route (04) mit einem Strafzuschlag, insbesondere einer erhöhten durchschnittlichen Fahrdauer, Streckenlänge oder Ähnlichem.
     Das Verfahren umfasst zumindest die Schritte:
S1: Eingabe zumindest einer Zielposition (03);
S2: Berechnung einer ersten Route (04);
S3: Strafzuschlagsbelegung zumindest einer Strecke der ersten Route (04);
S4: Berechnung zumindest einer weiteren Route (10, 12);
S7: Darstellung der Routen und Auswahl einer Route (25);
S8: Navigationsführung entlang der ausgewählten Route.

Fig. 2

EP 2 224 211 A1

**Beschreibung**

Die Erfindung geht aus von einem Verfahren und einer Vorrichtung zur Navigation eines Fahrzeugs entlang einer Route von einer Startposition oder einer momentanen Position zu einer Zielposition, wobei eine Routenberechnungseinrichtung einer Navigationsvorrichtung einen Routenverlauf, der sich als Sequenz mehrerer zusammenhängender, auf einer digitalen Karte einer Speichereinrichtung gespeicherter Strecken zusammensetzt, als eine erste Route berechnet. Des Weiteren wird zumindest eine Alternativroute durch Belegung von zumindest einer Strecke der ersten Route mit einem Strafzuschlag, insbesondere einer erhöhten durchschnittlichen Fahrtdauer, Streckenlänge oder Ähnlichem, berechnet.

Aus dem Stand der Technik sind gattungsgemäße Navigationssysteme bekannt, die durch Eingabe einer Startposition oder einer momentanen Position sowie einer Zielposition eine Route zwischen Start- und Zielposition berechnen. Diese wird anhand einer Routingstrategie berechnet, wobei die Strategie ein Optimierungsziel verfolgt, das eine distanzminimale oder zeiteffizienteste Route sein kann oder die Route nach gewünschten Vorgaben, beispielsweise Vermeidung von Autobahnen, kostenpflichtigen Straßen oder entlang von landschaftlich schönen Teilstrecken, optimiert.

Des Weiteren ist bei fortschrittlichen Navigationsvorrichtungen bekannt, dass eine Auswahl von Routen, die unterschiedlichen Routingstrategien genügen, für den Nutzer dargestellt wird. Daneben sind Navigationsvorrichtungen bekannt, die Verkehrsmeldungen, die beispielsweise über ein Verkehrsmeldesystem wie das RDS-TMC-System erfasst werden können, bei der Routenberechnung berücksichtigen, wobei vor Staus oder Verkehrsbehinderungen gewarnt werden kann bzw. Umfahrungsrouten vorgeschlagen werden können. Hierzu wird beim Eintreffen einer Verkehrsmeldung, die die vorausliegende derzeit befahrene Route betrifft, eine Umgehungsroute berechnet, und der Benutzer wird entlang der Umgehungsroute geführt, wobei dieser in den meisten Fällen keinen Einfluss auf die Gestaltung der Umgehungsroute nehmen kann.

Beispielsweise ist aus der EP 0 645 603 A1 eine Navigationsvorrichtung bekannt, die mehrere Routen zwischen einer Startposition und einer Zielposition berechnen kann, wobei eine erste Route berechnet wird und zumindest einzelne Strecken der ersten Routenstrecke aus einer Karte gelöscht werden, um weitere Routen zu berechnen.

Daneben geht aus der EP 1 172 631 A1 ein Verfahren zur Routenberechnung einer Navigationsvorrichtung hervor, bei dem eine Route unter Beachtung von Streckentypen mit spezifischen Eigenschaften, insbesondere durchschnittlicher Fahrgeschwindigkeit auf diesen Streckentypen, gesucht wird, um eine optimale Route nach Benutzeranforderung bereitzustellen.

Die oben genannten Verfahren bieten dem Benutzer keine Möglichkeit, anhand einer vorgegebenen Routingstrategie, beispielsweise zeitlich schnellste Route oder distanzkürzeste Route, eine oder mehrere Alternativrouten zu berechnen, wobei diese tatsächliche Alternativen und nicht nur geringfügige Modifikationen einer zuerst berechneten Route darstellen. Des Weiteren ermöglichen die oben genannten Verfahren und Vorrichtungen nicht, mehrere Alternativrouten transparent für einen Benutzer darzustellen, um ihm die freie Wahl zwischen verschiedenen konkreten Alternativrouten insbesondere bei Stauumfahrung zu lassen. Des Weiteren ist aus dem vorgenannten Stand der Technik nicht bekannt, individuelle oder durchschnittliche Fließgeschwindigkeiten entlang von Strecken für die Berechnung einer oder mehrerer Alternativrouten zu berücksichtigen.

Nachteilig an dem aus dem Stand der Technik bekannten Verfahren zur Berechnung mehrerer Routen ist es, dass die mehreren Routen nicht einer gemeinsamen Routingstrategie unterliegen und beispielsweise schnelle Verbindungen darstellen, sondern zumeist einer andersartigen Routingstrategie entsprechen. Des Weiteren ist nachteilig, dass bei Wechsel einer Routingstrategie, beispielsweise zwischen distanzkürzester zu zeitoptimierter Route, oftmals die gleichen Routen berechnet werden, da beispielsweise Schnellstraßen die zeitlich schnellste, aber meist auch die distanzkürzeste Route darstellen, so dass ein Routingstrategiewechsel oft keine wirklichen Alternativrouten erzeugen kann. Schließlich wird insbesondere bei der Meldung über Verkehrsstörungen und Staus nur eine Umfahrungsmöglichkeit angeboten, und diese lässt sich nicht durch den Benutzer beeinflussen, so dass er sich auf die automatische Umgehungsroute verlassen muss. Auch hier ist die Berücksichtigung unterschiedlicher Fließgeschwindigkeiten, die auf Fahrgewohnheiten des entsprechenden Benutzers, einer Benutzergemeinschaft und tagesspezifischen Verkehrsbedingungen Rücksicht nehmen, wünschenswert.

Die oben genannten Nachteile werden durch ein Verfahren und eine Vorrichtung nach den unabhängigen Ansprüchen gelöst. Vorteilhafte Weiterbildungen der Erfindung sind Gegenstand der Unteransprüche.

Erfindungsgemäß wird ein Verfahren zur Navigation eines Fahrzeugs entlang einer Route von einer Startposition oder einer momentanen Position zu einer Zielposition vorgeschlagen, wobei eine Routenberechnungseinrichtung einer Navigationsvorrichtung einen Routenverlauf, der sich als Sequenz mehrerer zusammenhängender, auf einer digitalen Karte einer Speichereinrichtung gespeicherter Strecken zusammensetzt, als eine erste Route berechnet und des Weiteren zumindest eine Alternativroute durch Belegung von zumindest einer Strecke der ersten Route mit einem Strafzuschlag, insbesondere einer erhöhten durchschnittlichen Fahrtdauer, Streckenlänge oder Ähnlichem, berechnet. Hierzu umfasst das Verfahren zumindest die Schritte:

S1:    Eingabe zumindest einer Zielposition;

S2:    Berechnung einer ersten Route;

S3:    Strafzuschlagsbelegung zumindest einer Strecke der ersten Route;

S4:    Berechnung zumindest einer weiteren Route;

S7:    Darstellung der Routen und Auswahl einer Route;

S8:    Navigationsführung entlang der ausgewählten Route.

Nach vorgenanntem Verfahren wird statt einer einer eingestellten Routingstrategie folgenden Route eine Mehrzahl von Routen berechnet, die dieser Routingstrategie folgen, und dem Benutzer präsentiert. Der Benutzer erhält die Möglichkeit, eine der vorgeschlagenen Routen zu akzeptieren und diese als empfohlene Route zu befahren. Des Weiteren können dynamische Inhalte, insbesondere Verkehrsmeldungen und Staunachrichten, bei der Berechnung der mehreren Routen berücksichtigt werden. Historische Daten, insbesondere Geschwindigkeitsprofile des Benutzers, können bei der Berechnung der Mehrzahl von Routen berücksichtigt werden, wodurch eine verbesserte Empfehlung einer oder mehrerer Routen auf Basis tatsächlicher Verkehrsfließgeschwindigkeiten entlang Strecken dieser Routen ermöglicht wird.

Das erfindungsgemäße Verfahren schlägt die Berechnung mehrerer Routen vor, die eine konkrete Alternative zu einer ersten berechneten Route darstellen und die einer gemeinsamen Routingstrategie, insbesondere schnellste Route, kürzeste Route oder Route entlang von besonders sehenswerten Orten etc., genügen. Bei der Bestimmung der Alternativrouten können Verkehrsmeldungen, wie Staus oder Verkehrsbehinderungen, berücksichtigt werden und so Routenalternativen vorgeschlagen werden, die der zuvor gewählten Routingstrategie genügen und die tatsächliche Alternativen zur ersten Route darstellen, wobei dem Benutzer eine Transparenz der Alternativrouten geboten wird sowie historische Werte des Benutzers oder von Benutzergruppen berücksichtigt werden können und andere Routen dargeboten werden als die von herkömmlichen Navigationsvorrichtungen, so dass eine Route ausgewählt werden kann, die nicht von den meisten anderen Verkehrsteilnehmern ebenfalls gewählt wird.

Erfindungsgemäß werden die Alternativrouten dadurch gefunden, dass ausgehend von einer ersten Route Strecken, d.h. Straßenelemente, der ersten Route mit Strafzuschlägen, insbesondere virtuell verlängerter Fahrzeit oder virtuell verlängerter Fahrdistanz, belegt werden, so dass bei einer Anwendung des Routenalgorithmus diese Strecken als nicht optimale Strecken für eine weitere Route angesehen werden. Hierdurch können Alternativrouten gefunden werden, die nicht entlang der Strecken der ersten Route führen. Durch die Belegung der Strecken der ersten oder der vorberechneten Routen mit Strafzuschlägen werden diese Strecken vom Routenalgorithmus je nach Routingstrategie als ungünstig verworfen, so dass konkrete Alternativrouten zu den zuvor berechneten Routen aufgefunden werden können.

In einem besonders vorteilhaften Ausführungsbeispiel des Verfahrens werden folgende Zwischenschritte berücksichtigt:

S5:    Vergleich und Bewertung der weiteren Route gegenüber der vorberechneten Route oder den Routen, insbesondere hinsichtlich Routendistanz, Fahrtdauer, Anzahl identischer Strecken oder Ähnlichem;

S6:    Entscheidung über Berechnung einer weiteren Route in Abhängigkeit des Bewertungsergebnisses, insbesondere Identität der Strecken, Routendistanz, Fahrtdauer, ein vorbestimmbares absolutes oder relatives Maß, und/oder Entscheidung über Verwerfung der weiteren Route in Abhängigkeit des Bewertungsergebnisses.

Dabei können die Strafzuschläge für eine weitere Routenberechnung angepasst werden. Des Weiteren kann das Verfahren so lange durchgeführt werden, bis eine vorbestimmbare Anzahl von Alternativrouten, bevorzugt drei Alternativrouten, berechnet worden ist. Somit schlägt dieses Ausgangsbeispiel eine iterative Berechnung von Routen vor, bis beispielsweise eine vorgegebene und gewünschte Zahl von Alternativrouten, die der zugrunde liegenden Routingstrategie entsprechen, aufgefunden worden ist. Sind diese Routenalternativen berechnet worden, so werden sie dem Benutzer vorzugsweise mit Bewertungsinformationen der jeweiligen Routenalternative, insbesondere Routenlänge, geschätzte Fahrzeit und/oder prognostizierte Ankunftszeit, dargestellt. Dabei können beispielsweise auch vorliegende Verkehrsinformationen, wie Staumeldungen oder Verkehrsbehinderungen entlang der Route, dem Benutzer angezeigt werden. Der Benutzer erhält hierdurch die Möglichkeit, unter den verschiedenen Routenalternativen eine auszuwählen und diese zur Navigationsführung zu nutzen. Durch die iterative Berechnung mehrerer Routenalternativen, bei der zumindest Streckenteile der vorberechneten Route oder Routen mit Strafzuschlägen, insbesondere künstlich verlangsamter Fahrgeschwindigkeit entlang der Strecke oder virtuell längerer Streckendistanz, belegt werden, werden diese derart unattraktiv für den Routingalgorithmus gemacht, dass dieser tatsächliche Routenalternativen zu den künstlich verschlechterten vorberechneten Routen sucht. Hierdurch wird eine Berechnung einer konkreten Alternativroute zugleich zu den vorberechneten Routen ermöglicht. Der Vergleich kann vorzugsweise darauf beruhen, dass Strecken, die gemeinsam zu Strecken vorberechneter Routen sind, identifiziert werden, und deren Anzahl im Verhältnis zur Gesamtzahl bzw. im Verhältnis zu den nicht gemeinsamen Elementen der vorberechneten Route betrachtet werden. Überschreitet dieses Verhältnis einen vorbestimmbaren Schwellwert, so wird die aktuell berechnete Route als zu ähnlich zu den vorberechneten Routen angesehen und verworfen, wobei eine erneute Berechnung, insbesondere mit erhöhten Strafzuschlägen, durchgeführt werden kann. Alternativ und/oder additiv hierzu kann auch die Streckenlänge oder die gewünschte Fahrtdauer auf gemeinsamen Streckenelementen im Verhältnis zu der Gesamtzahl bzw. im Verhältnis zu den nicht gemeinsamen Streckenelementen der vorberechneten Route betrachtet werden, um dies als Entscheidungskriterium für die Neuberechnung oder Verwerfung einer Route zugrunde zu legen. Durch eine Erhöhung der Strafzuschläge auf Streckenteilen der vorberechneten Routen wird der Routingalgorithmus gezwungen, Routen zu finden, die sich zumindest im Großteil der Strecken von den vorberechneten Routen unterscheiden. Dabei ist es durchaus denkbar, dass bei einer Überschreitung der Strafzuschläge über ein gewisses Maß die Route als zu unähnlich und damit zu unattraktiv für den Benutzer identifiziert und verworfen wird, wobei die iterative Berechnung weiterer Routen abgebrochen werden kann. Im Gegensatz dazu kann ein vorgenanntes Unterschiedlichkeitsmaß auch dahingehend betrachtet werden, dass bei Unterschreitung eines vorbestimmbaren Grenzwertes die aktuell berechnete Route als im Wesentlichen gleich oder zu ähnlich zu den vorberechneten Routen angesehen wird, und somit keine echte Alternative bildet, so dass diese verworfen wird und/oder mit erhöhten Strafzuschlägen eine erneute Berechnung durchgeführt werden kann. Durch die Steuerung der Höhe der Strafzuschläge können somit zum einen konkrete Alternativrouten gefunden werden, zum anderen kann sichergestellt werden, dass die aufgefundenen Routen nicht im Wesentlichen unattraktiv für den Benutzer sind, da sie nicht mehr der ursprünglichen Routingstrategie genügen.

Im Zusammenhang mit dem vorgenannten Ausführungsbeispiel ergeben sich zwei Kriterien für die Berechnung alternativer Routen:

Zum einen kann die Iteration einer weiteren Routenberechnung beendet werden, wenn offensichtlich keine weitere sinnvolle Route gefunden werden kann, die der vorgegebenen Routingstrategie genügt.

Zum anderen kann der Strafzuschlag der vorberechneten Route oder der vorberechneten Routen erhöht werden, um die Auffindung und Benutzung dieser Strecken für die aktuell berechnete Route unwahrscheinlicher zu machen. Dabei ist es denkbar, die Strecken aller vorberechneten Routen mit Strafzuschlägen zu belegen, oder nur die Strecke der zuletzt berechneten Routen mit Strafzuschlägen zu belegen, wobei im letzteren Fall die Gefahr besteht, dass Strecken der anderen als der zuletzt berechneten Route zur Berechnung der aktuellen Route benutzt werden können. Die Strafzuschläge können sich von einer Routenberechnungsiteration zur nächsten für die Strecken der zuletzt berechneten Routen aufsummieren. Dabei kann es denkbar sein, einen konstanten Strafzuschlag zu der Strecke hinzuzufügen, z.B. jeweils 10 % oder 5 min mehr Fahrzeit oder 10 % oder 2 km größere Streckenlänge. Des Weiteren ist denkbar, dass der Strafzuschlag einer tabellarischen Zuordnung oder einer funktionalen Beschreibung, z.B. einer Exponentialfunktion oder einer Polynomfunktion folgt, wobei die Zuschläge sowohl von der Eigenart der Strecke (Länge, prognostizierte Fahrzeit, prozentuale Abhängigkeit) als auch von der Anzahl der bereits berechneten Routen abhängen kann.

In einer vorteilhaften Ausprägung kann eine Kombination beider Handlungsvarianten durchgeführt werden, indem bei der Berechnung der ersten Routenalternative beispielsweise die Strafzuschläge zunächst erhöht werden, bis eine sinnvolle Routenalternative gefunden wird, während bei der Suche einer dritten und weiteren Alternative die Iteration beendet werden kann, falls offensichtlich keine weitere sinnvolle Route gefunden werden kann, die der vorgegebenen Routingstrategie genügt. So kann sichergestellt werden, dass zumindest eine Routenalternative aufgefunden wird, wobei das Auffinden von zwei oder drei Alternativrouten von der vorliegenden Streckentopologie abhängt. Somit kann das erfindungsgemäße Verfahren je nach Straßenlage nur eine einzige Alternativroute auffinden und diese dem Benutzer anzeigen oder zwei oder mehrere Alternativrouten zur Auswahl dem Benutzer darstellen. Dabei ist es insbesondere vorteilhaft, den Strafzuschlag für einzelne Strecken nicht als konstanten Wert oder als prozentualen Strafzuschlagswert, beispielsweise verlängerte Fahrtdauer oder Fahrdistanz, zu behandeln, sondern in Abhängigkeit der zuletzt aufgefundenen Routenbewertung den Strafzuschlag dynamisch anzupassen oder diesen in Form einer Tabelle oder einer funktionalen mathematischen Beschreibung je nach minimalem und maximalem Abweichungskriterium beispielsweise zu ähnlich bzw. zu unähnlich anzupassen.

Hinsichtlich des vorgenannten Ausführungsbeispiels, bei dem ein Vergleich und eine Bewertung der weiteren Routen stattfindet, ist es insbesondere vorteilhaft, eine Analyse der Routen auf ihre Eignung hinsichtlich der Routingstrategie durchzuführen, bei der ein Kennwert unter Berücksichtigung der Streckendistanzen und der geschätzten Fahrdauern entlang der Strecken der zuletzt berechneten Route ermittelt wird. Dieser kann beispielsweise durch die Formel:

$$K_r = f_s \cdot \sum_{seg_r} s + f_t \cdot \sum_{seg_r} t \,,$$

ermittelt werden, wobei $K_r$ einen Kennwert einer Route $r$ darstellt, die eine Menge von Segmenten $seg._r$ umfasst, wobei $s$ die Strecke jedes Segments darstellt und $t$ die geschätzte Fahrzeit entlang des Segments beschreibt. $f_s$ bildet einen Streckenfaktor, der die Gewichtung der Streckenlänge für den Kennwert beeinflusst, sowie $f_t$ einen Entscheidungsfaktor, der die Gewichtung der Fahrzeit auf den Kennwert berücksichtigt.

Durch Abwägen der Kennwerte $f_s$ und $f_t$ miteinander kann die Routingstrategie als kürzeste Route ($f_s$ groß gegenüber $f_t$) bzw. schnellste Route ($f_t$ groß gegenüber $f_s$) zur Berechnung des Kennwertes berücksichtigt werden. Beispielsweise werden bei der Routingstrategie "schnellste Route" die Faktoren $f_s$ und $f_t$ so gewählt, dass $f_t$ gegenüber $f_s$ besonders groß ist, während bei Strategie "kürzeste Route" $f_s$ groß gewählt werden soll, um den Einfluss der Streckendistanzen auf den Kennwert $K_r$ zu erhöhen. Dabei ist es denkbar, dass entsprechend der Größe der Kennwerte, wobei ein minimaler Kennwert eine optimale Eignung einer Route entsprechend der Routingstrategie darstellt, die Routen geordnet dem Benutzer angezeigt werden.

Entsprechend einem weiteren vorteilhaften Ausführungsbeispiel kann bei der Berechnung und/oder Bewertung einer Route das individuelle Fahrverhalten, insbesondere tageszeit- und wochentagbezogenes Fahrverhalten eines Benutzers und/oder einer Gruppe von Benutzern, hinsichtlich Strecken- und/oder Streckentypen berücksichtigt werden. Somit kann bei der Berechnung einer Route oder einer Alternativroute die tatsächliche Verkehrsfließgeschwindigkeit des Benutzers oder einer Benutzergemeinschaft mit in die Berechnung einfließen, und somit können Einflüsse von Tageszeit, Wochenende oder Werktagen, gefahrenen tatsächlichen Durchschnittsgeschwindigkeiten auf einem gewissen Streckentypus, wie Autobahn, Bundesstraße, Landstraße oder innerorts, der Eignung einer Strecke für eine zu berechnende Route zugrunde gelegt werden. Hierdurch können beispielsweise die voraussichtlichen Ankunftszeiten (ETA = estimated time of arrival) auf Basis der berechneten Routen bestimmt werden, wobei sich diese aus den prognostizierten Fahrzeiten entlang der Strecken der jeweiligen Route und der individuellen Abfahrtszeit ergeben und hierbei individuelle oder auch kollektiv erhobene empirische und historische Verkehrsfließgeschwindigkeiten auf den jeweiligen Strecken- und Geschwindigkeitsklassen vorwiegend für bestimmte Zeiträume, Tageszeiten und Wochentage berücksichtigt werden. Die historischen Daten einer Gruppe von Benutzern können beispielsweise beim Update von Daten der Navigationsvorrichtung oder mittels einer Online- bzw. Live-Verbindung einer Navigationsvorrichtung über Internet oder ein Funknetz, wie GSM, GPRS, UMTS etc., über einen zentralen Server für gewisse Streckentypen heruntergeladen werden und eigene Fahrgeschwindigkeitsdaten von Strecken anderer Benutzern bei deren Update zur Verfügung gestellt werden, so dass die historischen Daten einer Gruppe von Benutzern einzelnen Strecken zugeordnet werden können, um deren Fließgeschwindigkeit oder Fahrtdauer bei der Berechnung einer Route berücksichtigen zu können.

Ausgehend von den vorgenannten Berechnungsverfahren kann die Fahrzeit $t$ auf einer Strecke ein dynamischer Wert sein, der abhängig vom Wochentag, von der Tageszeit oder vom Fahrverhalten eines individuellen Benutzers oder einer Benutzergruppe ist. Basis dieser dynamischen Fahrzeit einer Strecke sind historische Verkehrsfließgeschwindigkeiten des Benutzers oder einer Gruppe von Benutzern, und diese können individuell für einzelne Streckenkategorien vorzugsweise in Abhängigkeit von Tageszeit und/oder Tag (Wochentag, Werktag, Feiertag) abgelegt werden. Die Daten einer Mehrzahl von Benutzern können beispielsweise zusammen mit Kartendaten entweder über UMTS, WLAN, WiMax, Bluetooth bzw. Update der Navigationseinrichtung drahtlos oder drahtgebunden von einem zentralen Server regelmäßig heruntergeladen werden. Der Kennwert einer Route mit dynamisierten Streckeninformationen kann sich nach folgender Formel:

$$K_r = f_s \cdot \sum_{seg_r} s + f_t \cdot \sum_{seg_r} t_{dyn}$$

ergeben, wobei $t_{dyn}$ eine dynamische Fahrzeit darstellt, die in Abhängigkeit von Tageszeit, Tagestyp oder individuellem/r Benutzer bzw. Benutzergruppe gewählt werden kann. Hier ist ebenfalls die Route mit dem geringsten Kennwert die empfohlene Route, und die Reihenfolge der angebotenen Alternativrouten kann sich nach der Größe des Kennwerts richten. Somit kann die Empfehlung einer bevorzugten Route durchaus gegenüber einer starren Berechnung abweichen, die nicht individuelle Benutzerdaten oder historische Werte berücksichtigt, so dass beispielsweise gleichartige Navigationsvorrichtungen mit gleichartigen Verfahren dennoch unterschiedliche Routen je nach Fahrverhalten des Benutzers oder einer Gruppe von Benutzern berechnen und vorschlagen können.

Gemäß einem weiteren vorteilhaften Ausführungsbeispiel kann der Strafzuschlag zumindest für einzelne Streckentypen, wie Autobahnen, Schnellstraßen, Landstraßen, Wohnstraßen oder Ähnliches, insbesondere für einzelne Strecken einer Route angepasst bestimmbar sein, und/oder der Strafzuschlag für einzelne Streckentypen oder für einzelne Strecken durch das individuelle Fahrverhalten eines Benutzers und einer Gruppe von Benutzern bestimmbar sein. In dieser Variante wird vorgeschlagen, dass bei der Belegung von Strecken vorberechneter Routen mit Strafzuschlägen die Eigenart des Streckentyps als Autobahn, Schnellstraße, Landstraße, Wohnstraße oder Ähnliches berücksichtigt wird und für diese Streckentypen unterschiedliche Strafzuschläge, die beispielsweise in einer Tabelle abgelegt sind, herangezogen werden.

Des Weiteren kann es vorteilhaft sein, die Strafzuschläge an historischen Fahrverhaltenswerten eines Benutzers oder einer Gruppe von Benutzern zu orientieren, beispielsweise wenn ein Benutzer bevorzugt Landstraßen oder bevorzugt Autobahnen befährt bzw. durchschnittliche Fließgeschwindigkeiten auf Autobahnen wesentlich höher oder niedriger als die auf Schnellstraßen bzw. Landstraßen bzw. Wohnstraßen liegen, so dass zum einen eine Bevorzugung eines Benutzers eines gewissen Streckentyps erkennbar ist, zum anderen ein abweichendes Fahrverhalten eines Benutzers oder einer Gruppe von Benutzern auf Streckentypen erkennbar ist, so dass diese bevorzugt oder benachteiligt mit Strafzuschlägen bewertet werden können. Somit schlägt dieses Ausführungsbeispiel vor, dass Strafzuschläge nach einer bestimmten Logik verteilt werden und Strecken eines oder mehrerer vorberechneter Routen mit Strafzuschlägen belegt werden, die für den Typ des Streckenelements angepasst sind, so dass eine variable Verteilung von Strafzuschlägen entlang der Strecken vorberechneter Routen ermöglicht wird. So starten die meisten Routen auf einer Nebenstrecke, beispielsweise in einem Wohngebiet oder auf einer Landstraße, und verlaufen jedoch den größten Teil der Route über Strecken höherer Streckenkategorien, beispielsweise Autobahnen oder Schnellstraßen, und enden wiederum in Nebenstrecken, wie Wohngebiet oder Landstraße. Für die Entscheidung über eine Alternativroute ist es daher vorteilhaft, insbesondere die langen Strecken, die auf höherklassigen Streckentypen wie Autobahn oder Schnellstraße verlaufen, mit höheren Strafzuschlägen zu bewerten als die Streckentypen niedrigerer Straßenklassen wie Landstraße, Wohnstraße etc. in der Nähe von Start- oder Zielposition. Es kann dabei vorteilhaft sein, dass bei Wohnstraßen der Strafzuschlag auf Null gesetzt wird, um zu vermeiden, dass eine Zielposition auf ungewöhnlichen Wegen und nicht entlang eines Hauptwegs über eine Wohnstraße erreicht wird.

Auf vorangegangener Überlegung beruhend schlägt ein weiteres vorteilhaftes Ausführungsbeispiel vor, dass der Strafzuschlag jeder Strecke in Abhängigkeit von der Entfernung von Start- und/oder Zielposition und/oder in Abhängigkeit einer Streckentypenstruktur einer Route bestimmbar ist. So ist es vorteilhaft, die Streckenelemente in der Nähe der Startposition, der momentanen Position und/oder der Zielposition mit einem sehr geringen bis keinem Strafzuschlag zu bewerten, um zu vermeiden, dass die Zielposition auf einem ungewöhnlichen Weg angefahren wird. Es ist des Weiteren vorteilhaft, Strecken, die mittig der Route liegen, mit einem erhöhten Strafzuschlag zu bewerten, um eine weitgreifende Umfahrung gegenüber der vorberechneten Route auffinden zu können. In Konsequenz wird die Mehrzahl berechneter Alternativrouten identische Strecken in der Nähe von Start- und/oder Zielposition benutzen, jedoch im Mittelteil der Route deutlich variieren.

Innerstädtische Routen bestehen aus vielen einzelnen kurzen Strecken, wobei die Gesamtdistanz relativ kurz, die Fahrtdauer jedoch aufgrund der geringen Durchschnittsgeschwindigkeit vergleichweise lang ist. Bei einer überregionalen Route, beispielsweise von einer Stadt in die nächste Stadt über eine Autobahn, werden jedoch im Mittelteil der Route viele lange Streckenelemente überfahren, während zu Beginn und am Ende kurze Streckenelemente liegen. Im letzteren Fall ist eine ungleiche Verteilung der Strafzuschläge vorteilhaft, bei der die Streckenelemente, die mittig der Route liegen, erhöht bestraft werden, wobei die ersten und letzten Streckenelemente mit lediglich z.B. 5 % Strafzuschlag belastet werden, so dass eine weitreichende Umfahrung der langen Autobahnelemente gefunden werden kann, wobei die innerstädtischen Streckenelemente am Start und Ziel kaum betroffen sind. Dies ist insbesondere bei einer distanzbasierten Routingstrategie zu bevorzugen.

Des Weiteren können Fälle auftreten, in welchen bestimmte Streckenelemente nicht mit Strafzuschlägen belastet werden dürfen, da sie die einzig sinnvolle mögliche Verbindung zwischen Start- und Zielposition darstellen, insbesondere Fähren, Brücken, Tunnel oder Gebirgspässe. Die Fahrt über eine Fähre oder eine Brücke stellt in der Regel eine einzige Möglichkeit dar, ohne großen Zeit- und Distanzverlust von einer Startzu einer Zielposition zu gelangen, so dass diese "Nadelöhr"-Streckentypen" sinnvollerweise nicht mit hohen Strafzuschlägen belegt werden sollten. Somit kann eine Analyse der Streckentypenstruktur, d.h. der Abfolge der Strecken verschiedener Streckentypen entlang der Route sinnvollen Aufschluss darüber geben, wie die Strafzuschläge gezielt verteilt werden sollen, um sinnvolle Alternativrouten aufzufinden. Entscheidet sich der Benutzer, eine Route entlang von markanten Orientierungspunkten, beispielsweise Städten, Seen oder interessanten Orten, auszurichten, so ist es durchaus sinnvoll, die in der Nähe liegenden Streckenteile an den entsprechenden Orten mit geringen oder keinen Strafzuschlägen zu belegen, um den Routenalgorithmus zu zwingen, Alternativrouten ebenfalls an diesen Orientierungspunkten vorbeiführen zu lassen.

Bezüglich der Berücksichtigung des individuellen Fahrverhaltens eines Benutzers für einzelne Strecken ist es sinnvoll, wenn das Fahrverhalten von einer Navigationsvorrichtung permanent aufgezeichnet und die Geschwindigkeitsparameter einer Strecke diesbezüglich an das individuelle Fahrverhalten eines Benutzers angepasst werden. Das aufgezeichnete Fahrverhalten, insbesondere durchschnittliche Fahrtzeit und Geschwindigkeit bezogen auf Tageszeit und Wochentag, kann an einen Fahrverhaltensserver gemeldet werden, der diese Information als Benutzergruppeninformation gemittelt an weitere Benutzer zur verbesserten Alternativroutenfindung weiterleiten kann.

Gemäß einem weiteren bevorzugten Ausführungsbeispiel kann die Routenverlaufsdarstellung grafische, insbesondere farbige, Routenverlaufsmarkierungen sowie bei überlappenden Strecken unterschiedliche Routenmarkierungen, insbesondere unterschiedliche Routendarstellungsbreiten, umfassen, und/oder eine textuelle Darstellung der Routen wesentliche Routenbewertungsinformationen, insbesondere Routendistanz, Fahrtdauer, Ankunftszeit, Streckentypen und/oder Verkehrsstatusinformationen, wie Stau oder Verkehrshindernisse entlang der Route, umfassen. So werden häufig zwei oder mehrere Routen aufgefunden, die gleiche Streckenabschnitte nutzen. Bei der grafischen Darstellung ist es daher besonders vorteilhaft, die einzelnen Alternativrouten farbig zu kennzeichnen, so dass sich ein Benutzer ein Bild über den Verlauf der einzelnen Routen machen kann, um eine bevorzugte Route auszuwählen. Bei gleichen Streckenabschnitten, d.h. überlappenden Strecken, ist es vorteilhaft, dass eine unten liegende Strecke breiter dargestellt wird als eine oben liegende Strecke, so dass gleiche Streckenteile mit verschiedenen Routendarstellungsbreiten der einzelnen Routen gekennzeichnet werden, um zu signalisieren, dass diese Strecken von mehreren Routen überfahren werden. Im Hinblick auf eine textuelle Darstellung der Routen ist es besonders vorteilhaft, wesentliche Bewertungsinformationen, die für die Auswahl des Nutzers vorteilhaft sind, wie Routendistanz, Fahrtdauer oder prognostizierte Ankunftszeit, sowie eventuell vorhandene Verkehrsstatusinformationen über Streckenabschnitte dieser Route, wie Staus oder Verkehrsbehinderungen, dem Benutzer mitzuteilen. Solche grafischen wie textuellen Informationsdarstellungen erleichtern dem Benutzer die Auswahl der für ihn angenehmen Alternativroute.

Entsprechend einem vorteilhaften Ausführungsbeispiel werden Informationen über Staus/Verkehrshindernisse über ein Verkehrsnachrichtensystem, insbesondere RDS-TMC, GSM, GPRS, UMTS, HSDPA, WLAN, WiMax, Bluetooth oder Ähnliches, für jede berechnete Route empfangen, routenspezifisch dargestellt und bei der Strafzuschlagsbestimmung und/oder Bewertung der Route einbezogen. Somit ermittelt das Verfahren für jede berechnete Route Verkehrsinformationen bezüglich Strecken, die diese Routen beinhalten, und wertet diese aus bzw. berücksichtigt diese bei der Bestimmung von Strafzuschlägen für die Berechnung weiterer Alternativrouten. Diese Informationen können dem Benutzer dargestellt werden, um darauf hinzuweisen, dass mit Verkehrshindernissen auf dieser Route zu rechnen ist.

Gattungsgemäße Navigationsvorrichtungen weisen in der Regel eine Empfangsschnittstelle für dynamische Verkehrsmeldungen auf, die vorzugsweise über einen RDS-TMC-Kanal empfangen werden. Des Weiteren existieren bereits Vorrichtungen, die eine drahtlose Empfangseinrichtung nach einem WLAN-Standard oder basierend auf Mobilfunktechnologien wie GPRS, UMTS, HSDPA aufweisen. Daneben existieren Lösungen, die drahtgebunden mittels Internet über einen Update-Server zumindest Informationen über prognostizierte regelmäßige Verkehrsbehinderungen empfangen. Somit können Navigationsvorrichtungen einen Überblick über die Verkehrslage, insbesondere über eine aktuell berechnete Route, ermitteln. Dieses Ausführungsbeispiel schlägt vor, dass bereits beim Zeitpunkt der Routenberechnung relevante Verkehrsinformationen entlang der berechneten Alternativroute empfangen werden und diese bei der Berechnung von Strafzuschlägen, beim Vergleich gegenüber vorberechneten Routen und bei der Darstellung für den Benutzer angezeigt werden, um das aktuelle Verkehrsgeschehen bei Berechnung, Auswahl und Bewertung von Routen zu berücksichtigen. Dabei ist es denkbar, dass die Anzahl der berücksichtigten Staumeldungen dem Benutzer hinsichtlich jeder Route als Hilfsmittel angezeigt wird. Bei Berücksichtigung der aktuellen Verkehrssituation ist es erforderlich, diese Information einer Verkehrsmeldung als Zeitverlustwert darzustellen, wobei der Zeitverlustwert als Strafaufschlag auf einzelne Streckenteile berücksichtigt werden kann. Des Weiteren hat ein solcher Zeitverlustwert Auswirkung auf die geschätzte Fahrzeit bzw. geschätzte Ankunftszeit und ermöglicht eine realistische Prognose der Fahrtdauer. Ein solcher Zeitverlustwert kann zum einen über das Verkehrsinformationssystem übermittelt werden und charakterisiert Art und Länge einer Störung.

Verkehrsmeldungen nach dem TMC-Standard enthalten üblicherweise einen Eventcode und einen Locationcode. Der Eventcode enthält Informationen, die in standardisierten Eventcode-Tabellen enthalten sind und die Auskunft über die Art der Meldung und, sofern enthalten, über die Länge geben. Hierbei ist es denkbar, eine Zuordnung von Fahrtzeitaufschlag und Streckenlänge zu jedem Eventcode vorzunehmen, um in einem Permanentspeicher einer Navigationsvorrichtung beispielsweise eine Eventcode-Tabelle vorzuhalten, die einem Eventcode einen Zeitverlustwert zuordnet. Eventcodes, die keine Störung angeben, sind keinen Aufschlagwerten zugeordnet oder können als Standardwerte, z.B. als prozentuale Verlangsamung über eine kurze Länge, dargestellt werden. Liegt beispielsweise eine Verkehrsmeldung mit einem Eventcode E über 5 Kilometer Stau vor, so kann mit verschiedenen Methoden aus dem Eventcode ein Zeitverlustwert berechnet werden:

In einer ersten Variante kann ein Verlangsamungswert auf z.B. 20 % der üblichen Fahrtzeit der Strecke über eine Länge von 5 Kilometern angenommen werden. Die Strecke des von der Verkehrsmeldung betroffenen Routenabschnitts weist beispielsweise eine gewichtete durchschnittliche Geschwindigkeit von 100 km/h auf. Durch den Verlangsamungswert auf 20 % wird die Geschwindigkeit auf 20 km/h reduziert. Jeder Kilometer, den man in 20 statt in 100 km/h durchfährt, dauert 144 Sekunden länger, wobei sich bei einer Störung von 5 Kilometern Länge ein Zeitverlustwert von 12 Minuten ergibt.

Alternativ zu der vorgenannten Möglichkeit der Berechnung eines Zeitverlustwerts kann eine voreinstellbare Verzögerungszeit für einen gewissen Eventcode berücksichtigt werden oder diesem Eventcode eine konstante Durchschnittsgeschwindigkeit zugewiesen werden. Im Falle einer vorgebbaren Verzögerungszeit pro Eventcode wird die Verzögerungszeit als Zeitverlustwert für das Event auf einer Strecke einer Route berücksichtigt. Im Falle einer konstanten Durchschnittsgeschwindigkeit wird die dem Event zugewiese Geschwindigkeit auf dem Streckenabschnitt mit der gewichteten durchschnittlichen Geschwindigkeit verglichen. Ist für das Event eine Geschwindigkeit von 50 km/h eingetragen, so kann die Fahrt pro Kilometer 72 Sekunden länger dauern, wobei sich ein Zeitverlustwert von 6 Minuten auf 5 Kilometer Länge ergibt gegenüber einer üblicherweise durchschnittlichen Geschwindigkeit von 100 km/h. Die oben genannten drei Varianten können in einer Eventcode-Tabelle kombiniert vorkommen und bei der Berücksichtigung des Zeitverlustwerts alternativ angewendet werden. Liegt für ein Event keine Information vor, so kann ein konstanter vorgegebener Zeitverlustwert angenommen werden. Durch Berücksichtigung des Zeitverlustwerts kann eine geschätzte Ankunftszeit ermittelt werden, die bei Wahl dieser Route zu berücksichtigen wäre. Dieser Zeitverlustwert kann insbesondere bei der Berechnung des Kennwerts $K_r$ berücksichtigt werden und gibt eine Empfehlung, ob diese Route als Referenzroute ausgewählt werden könnte. Hierzu ist die vorgenannte Formel zu modifizieren, so dass sich eine Berechnung des Kennwerts $K_r$ nach folgender Formel ergibt:

$$K_r = f_s \cdot \sum_{seg_r} s + f_t \cdot \left( \sum_{seg_r} t + \sum_{seg_r} Z \right),$$

wobei Z die Summe der Zeitverlustwerte der einzelnen Streckenteile auf dieser Route bezeichnet. Auch in diesem Fall können historische Fließgeschwindigkeiten des Benutzers oder einer Mehrzahl von Benutzern zeitabhängig für bestimmte Straßenkategorien berücksichtigt werden. Die Zeitverlustwerte Z der Streckenteile der Route berücksichtigen die Verkehrsmeldungen auf der entsprechenden Route und werden auf die Ankunftszeit bzw. auf die Fahrzeit aufgeschlagen. Die Route mit dem geringsten Kennwert $K_r$ ist somit die Präferenzroute.

Entsprechend einem weiteren vorteilhaften Ausführungsbeispiel können bei Empfang einer Verkehrsnachricht bezüglich der momentanen Route und ausgehend von der momentanen Position weitere Routen zur Umfahrung des Staus/Verkehrshindernisses berechnet werden, wobei des Weiteren die momentane Route als eine der Alternativrouten dargestellt werden kann. So schlägt dieses Ausführungsbeispiel vor, dass beim Befahren einer momentanen Route eine einkommende Verkehrsnachricht, die eine Strecke auf dieser Route betrifft, einen Start des erfinderischen Verfahrens auslöst, wobei ausgehend von der momentanen Position mehrere Alternativrouten entsprechend den vorgenannten Ausführungsbeispielen berechnet werden können, wobei wiederum Stau- und Verkehrshindernisinformationen für die Berechnung dieser Routen berücksichtigt werden. Somit wird nicht eine einfache, kurze Umfahrung der Strecke, auf der sich das Verkehrshindernis befindet, vorgeschlagen, sondern eine komplette Neuberechnung von Alternativrouten vorgeschlagen, die entsprechend der Erfindung stattfindet und ausgelöst durch das Eintreffen einer Verkehrsmeldung auf der momentanen Route gestartet wird.

Des Weiteren kann beim Auftreffen einer Verkehrsmeldung, die die momentan befahrene Route betrifft, die momentane Route mit Verkehrsmeldung weiterhin als Routenalternative angeboten werden, und darüber hinaus können weitere Routenalternativen berechnet werden. Somit kann der Nutzer sich auch dazu entscheiden, auf der momentan befahrenen Route zu verbleiben, um die weitere Entwicklung des Verkehrshindernisses/-staus abzuwarten, das/der sich bis zum Eintreffen an den Stau bereits auflösen kann.

Gemäß einem weiteren vorteilhaften Ausführungsbeispiel wird bei der Darstellung der berechneten Routen eine hinsichtlich eines Präferenzkriteriums ausgezeichnete Route, insbesondere kürzeste oder schnellste Route, als Präferenzroute empfohlen, wobei insbesondere bei der Auswahl der Route die Präferenzroute nach einer vorbestimmbaren Auswahlzeit, in der keine Auswahl durch den Benutzer erfolgt, als momentane Route ausgewählt werden kann. Somit schlägt dieses Ausführungsbeispiel vor, dass die Route mit dem kleinsten Kennwert $K$ als empfohlene Präferenzroute dem Benutzer dargestellt wird, wobei nach einer vorbestimmbaren Auswahlzeit diese Route als momentane Route automatisch ausgewählt wird, sofern keine Auswahl durch den Benutzer erfolgt. Diese Empfehlung kann durch eine optische Kennzeichnung oder eine Sortierung der Alternativrouten dem Benutzer dargestellt werden. Dabei orientiert sich die Sortierung an der Größe der Kennwerte $K_r$. Somit kann bei Nichtinteraktion des Benutzers eine bestmöglich angepasste Route an eine Routingstrategie als Präferenzroute für die momentane Navigation automatisch ausgewählt werden, so dass ein Benutzer nur eine geringe Interaktion mit der Navigationsvorrichtung durchführen muss, um die bestmöglichste Route auszuwählen.

In einem nebengeordneten Aspekt betrifft die Erfindung eine Navigationsvorrichtung zur Durchführung eines Verfahrens nach einem der vorgenannten Ausführungsbeispiele. Hierzu umfasst die Navigationsvorrichtung:

- eine Eingabeeinrichtung zur Eingabe zumindest einer Zielposition einer Navigation;

- eine Positionsermittlungseinrichtung zur Ermittlung einer momentanen Position des Fahrzeugs;

- eine Speichereinrichtung zur Speicherung von zumindest Streckenverläufen einer digitalen Karte und berechneten Routen;

- eine Routenberechnungseinrichtung zur Berechnung einer Route zwischen einer Startposition oder einer momentanen Position und einer Zielposition, insbesondere unter der Vorgabe einer Routenberechnungsbedingung wie fahrzeit- oder distanzminimale Route oder Ähnlichem;

- eine Navigationsführungseinrichtung zur kontinuierlichen Bestimmung von Navigationsanweisungen während der Bewegung des Fahrzeugs entlang einer ausgewählten Route;

- eine Ausgabeeinrichtung zur Ausgabe einer Darstellung zumindest zweier Routen und zur Ausgabe von Navigationsanweisungen;

- eine Strafzuschlagseinrichtung zur Beaufschlagung zumindest einer Strecke zumindest einer vorberechneten Route mit Strafattributen, wie zusätzliche Streckenlänge oder zusätzliche Fahrtdauer.

Erfindungsgemäß ist die Routenberechnungseinrichtung ausgelegt, um zumindest zwei Routen zwischen Startposition oder momentaner Position und Zielposition unter Berücksichtigung der Routenberechnungsbedingungen zu berechnen, und die Strafzuschlagseinrichtung ist ausgelegt, nach Berechnung einer ersten Route zumindest einzelne Strecken zumindest der ersten Route mit Strafzuschlägen zu belegen, so dass in einer weiteren Routenberechnung eine Alternativroute berechnet werden kann.

Mit anderen Worten umfasst eine Navigationsvorrichtung gemäß der Erfindung eine Positionsermittlungseinrichtung, eine Speichereinrichtung, eine Routenberechnungseinrichtung, eine Navigationsführungseinrichtung und eine Ausgabeeinrichtung, wie sie bereits aus dem Stand der Technik bekannt sind. Zusätzlich umfasst die Navigationsvorrichtung eine Strafzuschlagseinrichtung, die zumindest einzelne Strecken zumindest einer vorberechneten Route mit Strafzuschlägen, wie beispielsweise einer verlangsamten Fahrzeit oder einer längeren Fahrdistanz, belegen kann, um im Laufe einer weiteren Berechnung der Routenberechnungseinrichtung diese Strecken unattraktiv für den gewählten Routingalgorithmus zu machen, so dass die Routenberechnungseinrichtung eine tatsächliche Alternativroute zu der initial berechneten Route auffinden kann, wobei weitgehend Strecken der vorberechneten Routen ausgeklammert werden. Des Weiteren umfasst die Speichereinrichtung einen Kartenspeicher, in welchem die Strecken einer digitalen Karte abgelegt sind, die mittels der Routenberechnungseinheit zu einer Route von einer Startposition oder einer momentanen Position zu einer Zielposition zusammengesetzt werden können, sowie einen Routenspeicher, um die zumindest zwei berechneten Routen abzuspeichern.

Eine erfindungsgemäße Navigationsvorrichtung ermöglicht die Berechnung mindestens zweier Alternativrouten, wobei durch Belegung von einzelnen Strecken einer ersten berechneten Route mit Strafzuschlägen diese für eine weitere Berechnung durch die Routenberechnungseinheit derart unattraktiv werden, dass die Routenberechnungseinheit andere als die in der ersten Route verwendeten Strecken sucht, um die Alternativroute zu berechnen. Dennoch orientiert sich die Alternativroute an einer vorgegebenen Routingstrategie, wie beispielsweise kürzeste Distanz oder minimale Fahrzeit.

In einer besonderen Ausführungsform der Navigationsvorrichtung umfasst die Vorrichtung eine Routenbewertungseinrichtung zur Bewertung von Eigenschaften der vorberechneten Route oder der vorberechneten Routen, insbesondere hinsichtlich Routendistanz, Fahrtdauer, Anzahl identischer Strecken oder Ähnlichem, wobei die Strafzuschlagseinrichtung eingerichtet ist, auf Grundlage eines Bewertungsergebnisses der Routenbewertungseinrichtung zumindest einzelne Strecken der vorberechneten Routen mit geänderten Strafzuschlägen zu belegen. So ist durchaus denkbar, dass die Routenbewertungseinrichtung eine Vielzahl gemeinsamer Strecken zweiter oder mehrerer vorberechneter Routen erkennt und diese mit höheren Strafzuschlägen als die übrigen Strecken belegt, um diese gemeinsamen Strecken erschwert von einer weiteren Routenberechnung auszuschließen. Des Weiteren ermöglicht die Routenbewertungseinrichtung die Absenkung von Strafzuschlägen für einzelne Strecken, die in der Nähe der momentanen Position, Startposition oder Zielposition verlaufen, um zu verhindern, dass ein Ziel auf ungewöhnlichen Anfahrtswegen angefahren wird. Ist der Routenbewertungseinrichtung bekannt, dass ein Benutzer Autobahn oder Schnellstraßen bevorzugt, so können die Strafzuschläge für diese Straßenkategorien geringer ausfallen als für Landstraßen oder Nebenstraßen. Die Bewertungseinrichtung kann vordefinierbare Schwellwerte berücksichtigen, insbesondere einen Schwellwert für eine zu hohe Ähnlichkeit mit vorberechneten Routen und einen Schwellwert für eine zu große Abweichung zu den vorberechneten Routen. So kann bei einer hohen Identität der Strecken bzw. Fahrzeiten oder Routendistanzen eine berechnete Route mit vorberechneten Routen diese Route wegen zu großer Ähnlichkeit, beispielsweise 80 % identische Streckenlängen, verworfen werden. Auf der anderen Seite kann eine Route bei zu großer Abweichung der Routendistanz oder Fahrzeit, beispielsweise 80 % längere Fahrzeit oder Routenlänge, ebenfalls verworfen werden, da in beiden Fällen keine echten Alternativrouten aufgefunden wurden, sondern Routen, die entweder nahezu identisch sind oder hinsichtlich der gewählten Routingstrategie dem Benutzer inakzeptable Nachteile auferlegen.

Nach einem weiteren bevorzugten Ausführungsbeispiel umfasst die Eingabeeinrichtung ein Auswahlmittel zur Auswahl einer Route und ein Zeitgebermittel zur automatischen Auswahl einer Präferenzroute. Die vorberechneten Routen werden dem Benutzer in Form einer Liste, insbesondere kategorisiert nach ihrer Eignung hinsichtlich einer Routingstrategie, d.h. beispielsweise kürzeste Route oder zeitlich am schnellsten zu befahrene Route, dargestellt. Dazu eignet sich eine Priorisierung der Routen nach oben dargestelltem Kennwert $K$. Es kann die zeit- bzw. die distanzoptimalste Route bzw. die am besten einer Routingstrategie angepasste Route als Präferenzroute "MyRoute" ausgegeben werden und dem Benutzer ermöglicht werden, eine der aufgelisteten Routen als momentan zu befahrene Route auszuwählen. Mittels des Auswahlmittels kann automatisch die Präferenzroute "MyRoute" ausgewählt werden, sofern der Benutzer innerhalb eines vorgegebenen Zeitintervalls keine Auswahl trifft, so dass die Interaktion zwischen Benutzer und Navigationsvorrichtung verringert werden kann und eine bestmögliche Route nach Benutzerwünschen ausgewählt wird.

Gemäß einem weiteren bevorzugten Ausführungsbeispiel kann die Speichereinrichtung des Weiteren einen Streckenprofilspeicher zur Speicherung eines individuellen Fahrverhaltens, insbesondere eines tagezeitbezogenen Fahrverhaltens eines Benutzers und/oder einer Gruppe von Benutzern, auf zumindest einer Strecke umfassen. Hierbei kann im Streckenprofilspeicher insbesondere während einer Fahrt das Fahrverhalten entlang einer Strecke aufgezeichnet und abgelegt werden sowie bei der Planung einer Route ein streckenbezogenes Fahrverhalten aus dem Streckenprofilspeicher abgerufen werden. Durch Berücksichtigung eines individuellen Fahrprofils eines Benutzers oder einer Gruppe von Benutzer, beispielsweise im Austausch bei der Aktualisierung von GPS-Positionsdaten bzw. Kartenaktualisierung, kann das Fahrverhalten eines Benutzers bzw. einer Gruppe von Benutzern bezüglich einzelner Strecken hinterlegt werden. Jedoch speichert der Streckenprofilspeicher typische Fahrverhaltenseigenschaften, wie beispielsweise hohe Fahrgeschwindigkeit, durchschnittliche Fahrtdauer auf einer Strecke, so dass die Route auf tatsächlichen Fahrverhaltenseigenschaften anstatt auf vorgegebenen Eigenschaften beruht. Hierdurch können realitätsnähere und individuell angepasste Routenplanungen dem Benutzer angeboten werden. Dieses Fahrverhalten kann mittels eines Zeitstempels bezüglich Tageszeit, Wochentag, Feiertag oder Ähnlichem versehen werden. So kann beispielsweise bei einer Strecke, die in den Mittagszeiten oder Abendstunden mit relativ hoher Geschwindigkeit befahren werden kann, in den Morgenstunden mit einer relativ niedrigen Fahrgeschwindigkeit gerechnet werden, so dass in den Morgenstunden eine andere als die betrachtete Strecke bei einer Routenplanung bevorzugt werden sollte. Hierdurch bildet die Routenplanung ein realitätsnahes Fahrverhalten entlang einer Route nach und kann für den Benutzer eine optimale Navigationsführung ermöglichen.

Gemäß einem weiteren bevorzugten Ausführungsbeispiel umfasst die Navigationsvorrichtung eine Kommunikationseinrichtung zur drahtlosen oder drahtgebundenen Kommunikation eines individuellen Fahrverhaltens und/oder eines Fahrverhaltens einer Gruppe von Benutzern auf zumindest einer Strecke zwischen Streckenprofilspeicher und einem entfernten zentralen Fahrverhaltensserver, wobei die Kommunikationseinrichtung insbesondere drahtlos über GSM, GPRS, UMTS, HSDPA, WLAN, WiMax oder ähnlichen drahtlosen Kommunikationskanälen bzw. drahtgebunden über LAN, Internet, USB oder Ähnliches mit einem Fahrverhaltensserver kommunizieren kann. Nach diesem Ausführungsbeispiel kann beispielsweise das Fahrverhalten eines Fahrers permanent während einer Fahrt auf einzelnen Strecken aufgezeichnet werden, und bei Verbindung der Navigationsvorrichtung über die Kommunikationseinrichtung mit dem Fahrverhaltensserver können diese Daten hochgeladen bzw. die Daten einer Gruppe von Benutzern in den Streckenprofilspeicher heruntergeladen werden, um aktuelle Informationen über das Fahrverhalten auf einzelnen Strecken zu erhalten, damit eine möglichst realitätsnahe Routenführung ermöglicht wird.

Weitere Vorteile ergeben sich aus der folgenden Figurenbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 in einer Blockdarstellung ein Ausführungsbeispiel einer erfin- dungsgemäßen Navigationsvorrichtung;

Fig. 2 ein Ablaufdiagramm eines ersten Ausführungsbeispiels eines erfindungsgemäßen Navigationsverfahrens;

Fig. 3 eine beispielhafte Darstellung einer grafischen Anzeige einer Navigationsvorrichtung nach Berechnung einer ersten Route;

Fig. 4      eine weitere Anzeige einer Navigationsvorrichtung nach Berechnung dreier Alternativrouten;

Fig. 5      eine Darstellung einer weiteren Navigationsanzeige nach Berechnung zweier Alternativrouten;

Fig. 6      eine weitere Anzeige einer erfindungsgemäßen Navigationsvor- richtung, wobei keine Alternativroute aufgefunden werden konnte;

Fig. 7      Auswahlmenüs zur Auswahl von Alternativrouten für eine Simulation nach einem Ausführungsbeispiel;

Fig. 8      eine weitere Navigationsanzeige mit drei Alternativrouten, wobei sich zwei Routen größtenteils überlappen;

Fig. 9      eine weitere Anzeige von aufgefundenen Alternativrouten bei verschiedenen Tageszeiten;

Fig. 10     Abfolge von Anzeigen von Alternativrouten beim Auftreten von Verkehrshindernissen/Staus;

Fig. 11     Anzeige von auftretenden Staus/Verkehrsmeldungen auf be- rechneten Alternativrouten;

Fig. 12     eine schematische Darstellung einer Stauumfahrung unter Verwendung eines erfindungsgemäßen Verfahrens.

In den Figuren sind gleiche oder gleichartige Komponenten mit gleichen Bezugzahlen beziffert.

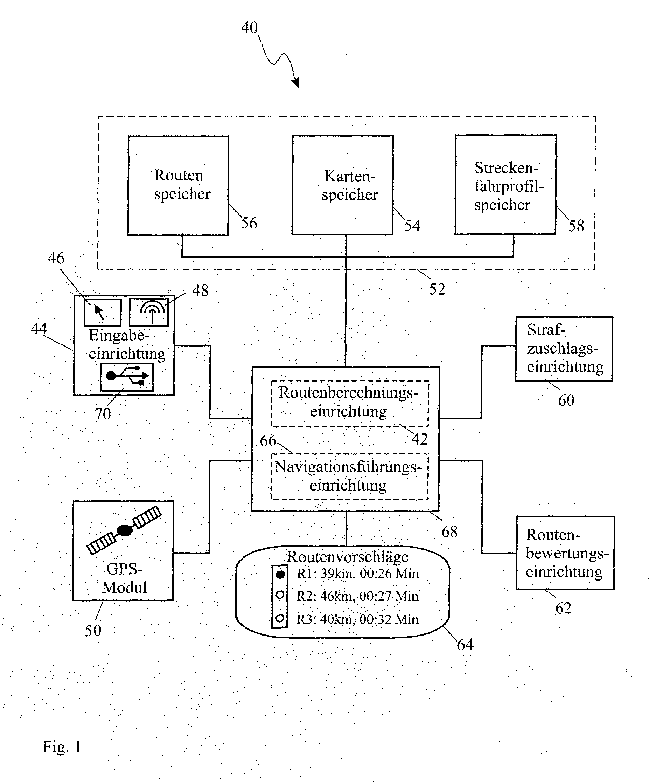

Die Fig. 1 zeigt ein erstes Ausführungsbeispiel 40 einer erfindungsgemäßen Navigationsvorrichtung. Die Navigationsvorrichtung 40 umfasst ein Rechnersystem 68, in dem sich eine Routenberechnungseinrichtung 42 und eine Navigationsführungseinrichtung 66 befindet. Am Rechnersystem 68 ist eine Eingabeeinrichtung 44 angeschlossen, die sowohl ein Touchscreenmittel 46 als auch ein TMC-Empfangsmittel 48 umfasst. Des Weiteren kann eine Tastatur oder ein Stimmenerkennungsmittel an die Eingabeeinrichtung 44 angeschlossen werden. Die Eingabeeinrichtung 44 umfasst des Weiteren eine Kommunikationseinrichtung 70 zur Kommunikation des Fahrverhaltens spezifischer Daten des Strekkenfahrprofilspeichers mit einem Fahrverhaltensserver (nicht dargestellt), wobei die Kommunikationseinrichtung 70 drahtlos oder drahtgebunden gesammelte Informationen eines Fahrers über das Fahrverhalten entlang einer Strecke dem Fahrverhaltensserver mitteilen kann sowie das Fahrverhalten einer Gruppe von Benutzern bezüglich Strecken vom Fahrverhaltensserver beziehen kann, um realistische Routenplanungen erstellen zu können.

Eine Positionsermittlungseinrichtung 50, in diesem Fall ein GPS-Modul, das jedoch auch gegen ein Galileo-, EGNOS-, GLONASS-, COMPASS- oder ähnliches Satellitenempfangsmodul oder ein terrestrisches Koppelortungsmodul oder eine Kombination der vorgenannten ausgetauscht werden kann, dient zur Ermittlung der momentanen Position des Fahrzeugs und ist ebenfalls am Rechnersystem 68 angeschlossen. Das Rechnersystem 68 befindet sich in bidirektionaler Kommunikation mit einer Speichereinrichtung 52, die Daten speichern und ausgeben kann. Die Speichereinrichtung 52 umfasst einen Kartenspeicher 54, in dem Strecken einer digitalen Karte abgelegt sind, die mittels der Routenberechnungseinrichtung zu einer Route zusammengefasst werden können. Jeder Strecke ist eine Streckenlänge sowie eine maximal erlaubte Fahrgeschwindigkeit zugeordnet. Des Weiteren kann jeder Strecke zumindest eine individuelle Fahrgeschwindigkeit, bevorzugt mit einem Zeitprofil versehen, zugeordnet sein. Darüber hinaus umfasst die Speichereinrichtung 52 einen Routenspeicher 56, in den berechnete Routen abgelegt werden können. Schließlich umfasst die Speichereinrichtung 52 einen Streckenprofilspeicher 58, der das Fahrverhalten eines individuellen Benutzers oder einer Gruppe von Benutzern bezogen auf einzelne Strecken abspeichern kann, um realistische Fahrverhaltensprofile der Strecken bei der Routenplanung zu berücksichtigen.

Das Rechnersystem 68, insbesondere die Routenberechnungseinrichtung 42, ist mit einer Strafzuschlagseinrichtung 60 verbunden, wobei die Strafzuschlagseinrichtung 60 ausgelegt ist, die Eigenschaften einzelner Strecken aller vorberechneten Routen mit Strafzuschlägen zu belegen, um die durchschnittliche Fahrgeschwindigkeit dieser Strecken virtuell zu erhöhen, um diese unattraktiv für die Berechnung weiterer Routen zu machen. Des Weiteren ist die Routenberechnungseinrichtung 42 des Rechnersystems 68 mit einer Routenbewertungseinrichtung 62 verbunden, die nach erfolgter Berechnung einer Route diese gegenüber der vorberechneten oder gegenüber allen vorberechneten Routen vergleicht, und eingerichtet ist, identische Strecken der Routen zu erkennen, sowie Schwellwerte beinhaltet, die Aussage darüber treffen, ob eine Route sehr ähnlich zu den vorberechneten Routen ist oder so stark von den vorberechneten Routen abweicht, dass die Route verworfen werden sollte. Schließlich ist das Rechnersystem 68 mit einer Ausgabeeinrichtung 64 verbunden, die grafische und akustische Navigationsführungsanweisungen sowie eine Liste der berechneten Routen ausgeben kann und die Liste der Routen zur Auswahl dem Benutzer vorschlagen kann.

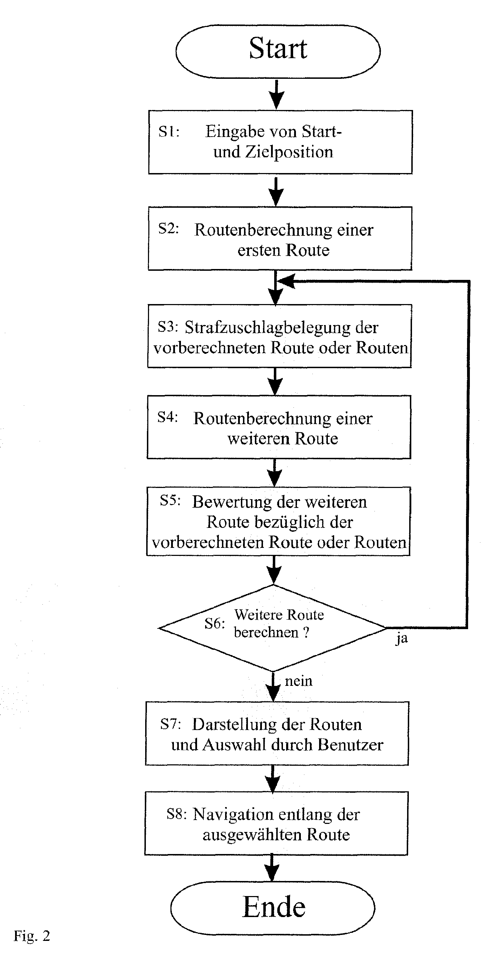

In der Fig. 2 ist ein Ablaufdiagramm eines Ausführungsbeispiels des erfindungsgemäßen Verfahrens dargestellt.

Im Schritt S1 werden eine Zielposition sowie eine Startposition eingegeben bzw. eine momentane Position ermittelt. Im Schritt S2 erfolgt eine Routenberechnung einer ersten Route, die sich nach einer gewählten Routingstrategie richtet, beispielsweise zeit- oder distanzminimale Route oder Route unter Vermeidung von Mautstraßen bzw. Fähren etc.. Im Schritt S3 werden zumindest einzelne Strecken der vorberechneten Route mit Strafzuschlägen belegt, um diese für einen nachfolgenden Routenberechnungsvorgang unattraktiv für den Routenberechnungsalgorithmus zu machen.

Im Schritt S4 erfolgt die Berechnung einer weiteren Route, die der gewählten Routingstrategie entspricht, und in Schritt S5 erfolgt eine Bewertung der berechneten Route im Vergleich mit einer zuletzt berechneten bzw. allen zuletzt berechneten Routen. Hierbei kann die Anzahl der identischen Strecken gegenüber der Anzahl der nicht identischen Strecken der vorberechneten Routen ausgewertet werden oder die Distanzlänge bzw. Fahrzeit der Route gegenüber den vorberechneten Routen verglichen werden. Bei Unterschreitung oder Überschreitung vordefinierbarer Schwellwerte kann entschieden werden, die aktuell berechnete Route zu verwerfen und/oder eine weitere Routenberechnung zu starten. Diese Entscheidung erfolgt in Schritt S6, insbesondere bis eine vordefinierbare Anzahl von Routen, in bevorzugter Weise drei Routen, aufgefunden worden sind. Nach Abschluss des Routenberechnungsverfahrens werden die Routen dem Benutzer ausgegeben, und es wird auf eine Auswahl einer Route durch den Benutzer gewartet. Schließlich erfolgt in Schritt S8 eine Navigationsführung des Fahrzeugs entlang der ausgewählten Route. Trifft über ein Verkehrsinformationssystem, wie RDS-TMC, eine Verkehrsstörungsmeldung bezüglich einer Strecke der ausgewählten Route ein, kann das Verfahren wiederholt von der aktuellen Fahrzeugposition aus ablaufen, und Alternativrouten zur Umfahrung des Verkehrshindernisses können gesucht werden.

Die nachfolgenden Figuren zeigen beispielhaft verschiedene Bildschirmausgabedarstellungen einer erfindungsgemäßen Navigationsvorrichtung, die über übliche Ausstattungsmerkmale, wie Touchscreen, virtuelle Tastatur sowie Sprachaus- und -eingabe, verfügen kann. Andere Darstellungsarten sind ebenfalls möglich bzw. in Kombination denkbar. Ausgegangen wird in den Beispielen von der Situation, dass der Benutzer sich in einem Fahrzeug befindet und das Fahrzeug durch eine Positionsermittlungseinrichtung, insbesondere GPS oder Koppelortung, lokalisiert werden kann. Dabei hat der Benutzer durch Adresseingabe, Auswahl eines Sonderziels, Klick in die Karte, Auswahl eines Adressbucheintrags, Download von einem entfernten Server oder Vergleichbares eine Zielposition ausgewählt.

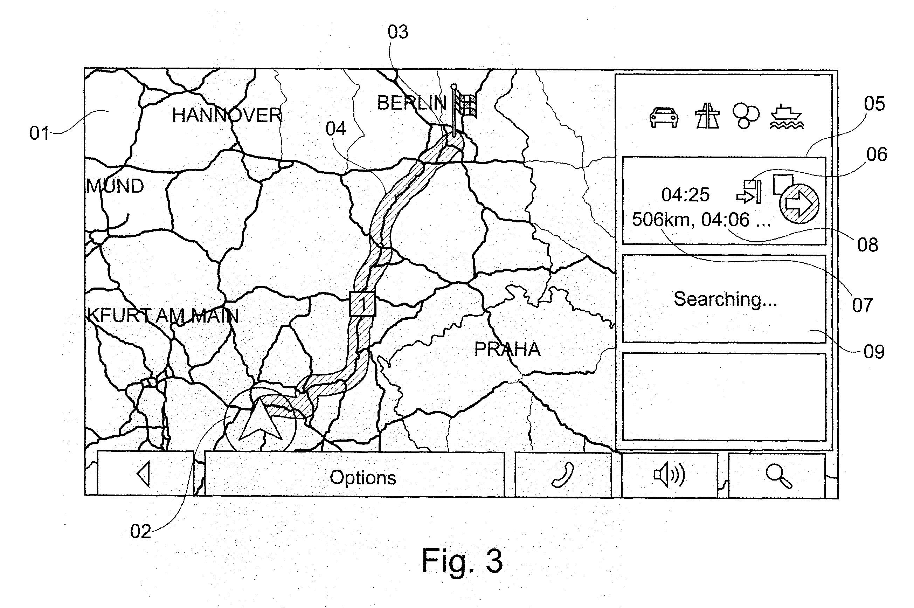

In der Fig. 3 ist beispielhaft eine Anzeige dargestellt, in welcher eine erste Route berechnet wurde. Auf der Karte 01 sind die momentane Position 02 als Startpunkt der Route und die gewählte Zielposition 03 sowie der Verlauf einer ersten Route 04 dargestellt. Mittels der Karte 01, in der Ortsnamen, Grenzen, Hauptstraßen und Orientierungspunkte dargestellt sind, kann der Benutzer einen Überblick über den Verlauf der ersten Route 04 erhalten. Im rechten Feld der Anzeige sind in Form einer Schaltfläche 05 Kenndaten der ersten Route 04 dargestellt. In dieser Schaltfläche werden Ankunftszeit 06, Routendistanz 07 und prognostizierte Fahrzeit 08 dargestellt. Durch Betätigung der Schaltfläche 05 kann der Benutzer diese Route 04 zur Navigationsführung auswählen. Im darunterliegenden Feld 09 ist ein Darstellbereich für Alternativrouten vorgesehen, wobei in diesem Beispiel dem Benutzer mitgeteilt wird, dass momentan weitere Alternativrouten berechnet werden.

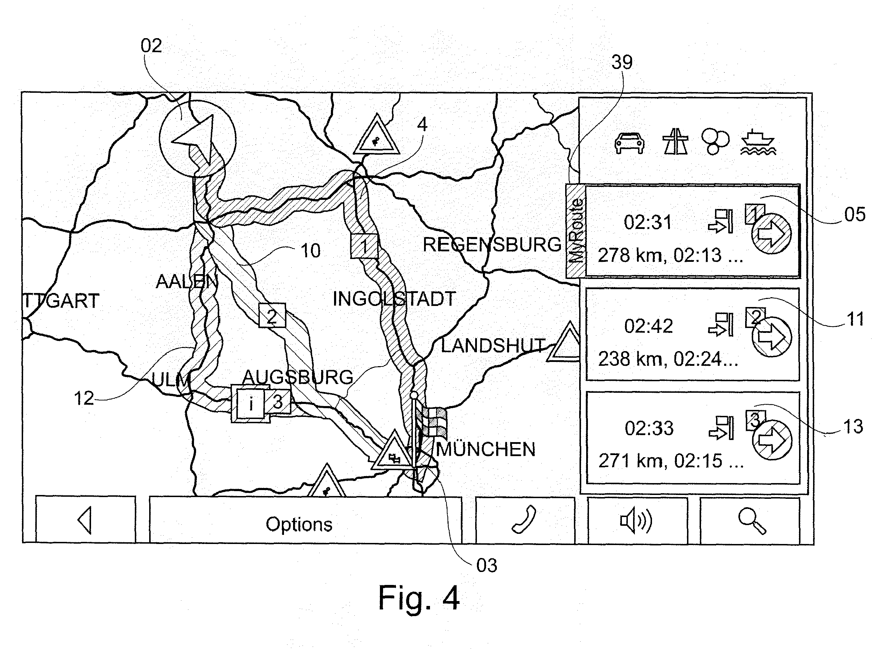

Fig.4 zeigt eine weitere Darstellung einer Navigationsanzeige für eine andere Region, in der bereits drei Alternativrouten 04, 10 und 12 bei einer Fahrt von Bad Mergentheim nach München berechnet worden sind. Dabei ist es denkbar, eine beliebige Anzahl von Routen zu berechnen, jedoch ist bei der Darstellung von drei Routen ein gutes Gleichgewicht zwischen Informationsüberflutung und Informationsübersicht gegeben. Neben der zuerst berechneten Route 04, die Startposition 02 und Zielposition 03 verbindet, sind zwei weitere Routen 10, 12 auf der Karte 01 verlaufsmäßig dargestellt, die eine deutlich andere Streckenführung vorschlagen. Die Details der Routen 04, 10, 12 sind auf den Schaltflächen 05, 11 und 13 dargestellt, wobei die zuerst berechnete Route 04, die in der Schaltfläche 05 auswählbar ist, als Präferenzroute 39 "MyRoute" gekennzeichnet ist. Es ist vorteilhaft, für die Darstellung der Routen und der Schaltflächen besonders ausgezeichnete Farben, Signaturen oder Routenkennzeichner zu verwenden, so dass ein Benutzer intuitiv die Zuordnung von der Schaltfläche 05, 11, 13 zur dargestellten Route 04, 10, 12 auf der Karte 01 erkennen kann. Zusätzlich oder alternativ kann durch Zahlenangabe oder sonstige Kennzeichnung die Routendarstellung in der Karte 01 und auf den Schaltflächen 05, 11, 13 den Zusammenhang zwischen den dargestellten Routen 04, 10, 12 und Schaltflächen 05, 11, 13 deutlich machen.

Die Schaltfläche 05 hat zusätzlich eine Kennzeichnung 39 als Präferenzroute "MyRoute", die dem Nutzer anzeigt, dass dies die präferierte Route ist, da sie am besten den vorgegebenen Routingstrategien, z.B. zeitlich schnellste Route oder streckenkürzeste Route, entspricht. Neben dieser kennzeichnungspräferierten Route können die Routen nach dem Kennwert $K$ sortiert werden, so dass immer die oberste Route die Routingstrategie am bestmöglichsten erfüllt, dann die zweite dargestellte Route usw..

Nach Anwahl einer Schaltfläche 05, 11, 13 wird die zugeordnete Route als momentan befahrene Route angewählt, und die Navigationsführung wird entlang der ausgewählten Route gestartet.

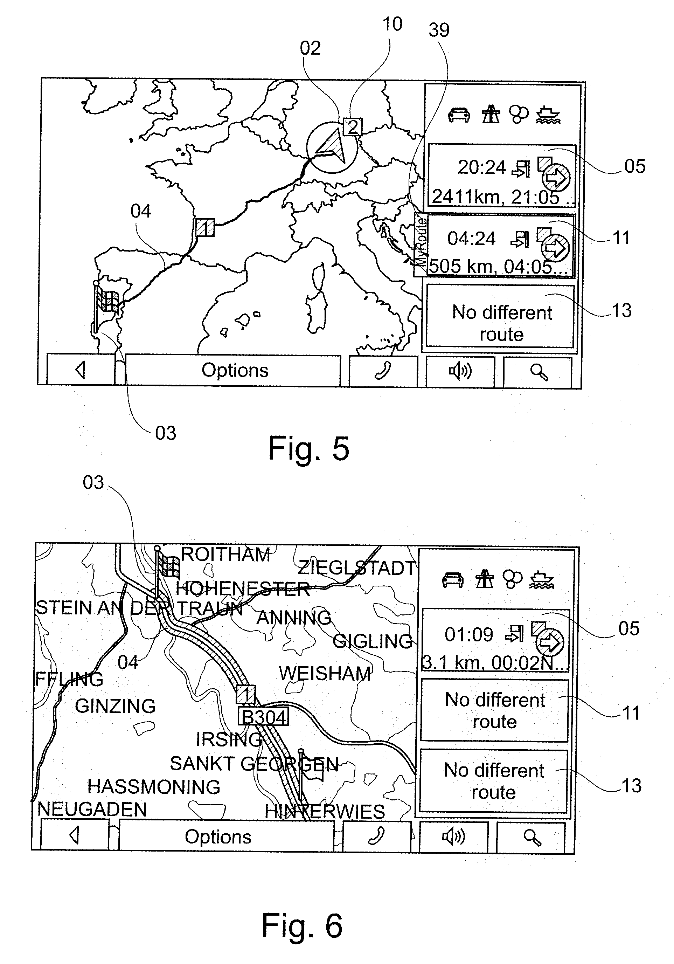

Die Fig. 5 und 6 zeigen Anzeigen von Ausführungsbeispielen von erfindungsgemäßen Navigationsvorrichtungen, bei denen zwei (Fig. 5) oder nur eine einzige (Fig. 6) Route gefunden werden konnten. Das Auffinden von zwei Routen, wie in Fig. 5 dargestellt, oder nur einer einzigen Route, wie in Fig. 6 dargestellt, kann darauf beruhen, dass selbst bei der iterativen Erhöhung von Strafzuschlägen keine relevanten Abweichungen einer aufgefundenen Alternativroute zur ursprünglichen Route gefunden werden konnten, oder eine ermittelte Alternativroute derartige Streckenverlängerungen bzw. Zeitnachteile mit sich bringt, dass sie keine günstige Alternative darstellt, so dass die aufgefundene erste 04 oder die ersten beiden Routen 04, 10 als günstigste Routen erscheinen. In diesem Fall wird die Iteration zur Suche weiterer Alternativrouten abgebrochen. In Fig. 6 ist zu erkennen, dass die Zielposition auf geradem Weg am besten durch die Route 04 erreicht werden kann, und denkbare Alternativen zu einer deutlichen Verlängerung des Weges führen würden. Daher ist ein Abbruchkriterium sinnvoll, das eine zu hohe Abweichung zweier Routen genauso wie eine zu hohe Identität zweier Routen verhindert. In den Schaltflächen 11 bzw. 13 wird grafisch oder textuell dem Benutzer mitgeteilt, dass keine sinnvollen Routenalternativen aufgefunden werden konnten.

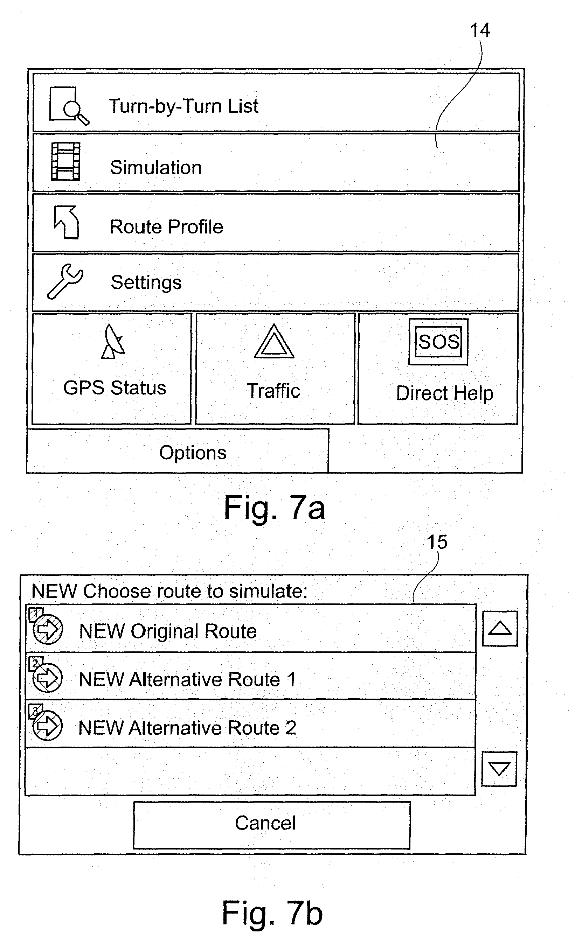

Die Fig. 7a und 7b zeigen beispielhaft Auswahlmenüs 14, 15, die eine Simulation einer Routenführung entlang einer noch auszuwählenden Route anstoßen. Im Schaltfeld 14 der Fig. 7a kann eine Simulation aktiviert werden, wobei im Untermenü 15 nach Fig. 7b zunächst nach der Route, die zu simulieren ist, gefragt wird. Durch Betätigung einer Schaltfläche der Routenauswahlliste 15 kann ausgewählt werden, welche Route zu simulieren ist.

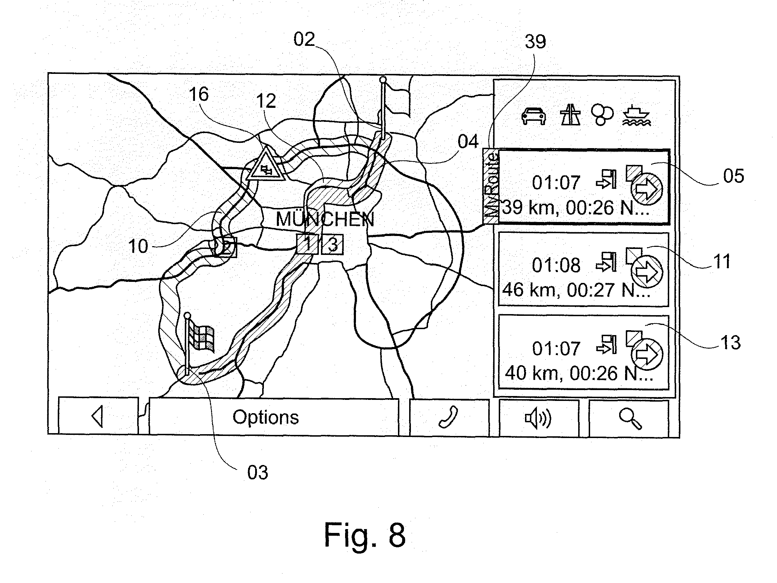

Die Fig. 8 zeigt eine Bildschirmdarstellung einer erfindungsgemäßen Navigationsvorrichtung, in der bereits drei Routen 04, 10, 12 zur Fahrt zwischen Startposition 02 und Zielposition 03 aufgefunden und dem Benutzer dargestellt worden sind. Zusätzlich ist mit einem entsprechenden Symbol eines Verkehrshindernisses/einer Stauanzeige 16 auf der Route 10 dargestellt, dass bei Verfolgung der Alternativroute 10, die mit der Schaltfläche 11 ausgewählt werden kann, mit dem Auftreten eines Staus zu rechnen ist. Dieser Stau kann bereits bei der Berechnung der Alternativroute 10 in Betracht gezogen worden sein, so dass die angegebene Fahrzeit entsprechend erhöht angegeben worden ist. Der Nutzer erhält bereits im Vorfeld vor Auswahl einer Route Informationen darüber, auf welchen der gewählten Routen mit Verkehrsbehinderungen/Staus zu rechnen ist. Wählt der Nutzer die Routenalternative 10 aus, so ist die Ankunftszeit risikobehaftet, auch wenn die Schaltfläche 11 nur eine geringfügig längere Fahrzeit anzeigt. Ebenfalls ist in der Fig. 8 das Problem einer hohen Identität der Route 04, 12 dargestellt, wobei die zuerst berechnete Route 04 auf einer niedrigeren Zeichenebene als die zuletzt berechnete Route 12 dargestellt ist. Auf den gleichen Strecken würde somit die zuletzt berechnete Route 12 den Routenverlauf 04 vollständig überdecken. Um dies zu verhindern, ist es vorteilhaft, dass die früher bzw. auf einer tieferen Zeichenebene gezeichnete Route 04 als breitere Routenverlaufssignatur dargestellt wird als die spätere bzw. höher gezeichnete Route 12. Da es auf der anderen Seite vorteilhaft ist, wenn die präferierte Route 39, die in diesem Fall die Route 04 darstellt, vollständig sichtbar ist, kann eine weitere Logik vorgesehen sein, die die berechneten Routen entsprechend ihrem Ordnungskriterium, d.h. ihrer Kennzahl, darstellt, wobei die Präferenzroute 39 bzw. die am besten an die Routingstrategie angepassten Routen auf den höchsten Zeichenebenen liegen. Somit kann dem Benutzer die am besten angepasste Route 04 seiner Routingstrategie deutlich sichtbar gemacht werden.

Ein einfaches Ordnungskriterium für die Darstellung des Routenverlaufs kann die Berechnungsreihenfolge sein, d.h. die zuerst berechnete Route liegt als oberste Route obenauf, die zuletzt berechnete Route als unterste Zeichenebene. Ein anderes Kriterium kann das routenspezifische Kennwort $K_r$ sein, wobei die empfohlene Route, also die mit dem geringsten Kennwert, als oberste und damit am dünnsten gezeichnet werden kann.

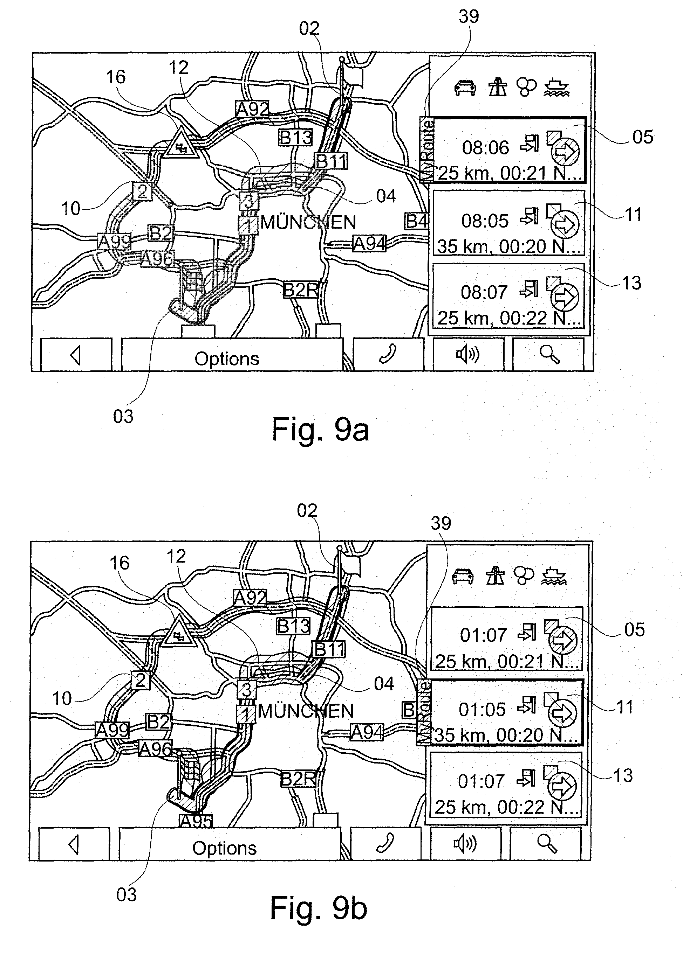

Die Fig. 9a und 9b zeigen beispielhaft die Auffindung von drei Routenalternativen zwischen einer Start- und einer Zielposition zu unterschiedlichen Tageszeiten. Hierbei zeigt Fig. 9a die Prognose zur Tageszeit früh morgens während eines Werktags, während Fig. 9b dieselben Routenverläufe in der Nacht darstellt, in der wenig Verkehr herrscht. Deutlich ist zu erkennen, dass in Fig. 9b die Fahrzeiten geringer als in Fig. 9a prognostiziert sind. Somit zeigen die beiden Figuren den Einfluss fahrverhaltensabhängiger Geschwindigkeitsparameter für unterschiedliche Zeiträume. Fig. 9a zeigt das Ergebnis der Berechnung dreier Routenalternativen 04, 10, 12 zwischen Startposition 02 und Zielposition 03 am Morgen zu einer aktuellen Uhrzeit von 7.45 Uhr. Der gezeigte Münchener Autobahnring ist um diese Zeit stark befahren, wobei für den Streckentyp Autobahn historische Informationen in Bezug auf Fahrverhalten bzw. Geschwindigkeitsparameter des Benutzers oder eine Mehrzahl von Benutzern vorliegen, die darauf hinweisen, dass zu diesem Zeitpunkt eine geringere Fahrgeschwindigkeit erzielt werden kann als normal. Daher ist die Empfehlung 39, die innerstädtische Route 04 zu wählen, da die erwartete Ankunftszeit früher ist. Fig. 9b zeigt die gleiche Situation in der Nacht, und die Präferenzroute 39 wird nun als Route 10 auf dem Autobahnring ausgewählt, da die vorliegenden historischen Informationen über diesen Streckentyp zu diesem Zeitpunkt eine höhere Durchschnittsgeschwindigkeit ergeben und damit zu erwarten ist, dass die Fahrtdauer entlang des Autobahnrings geringer als über den innerstädtischen Ring nach Route 04 sein wird.

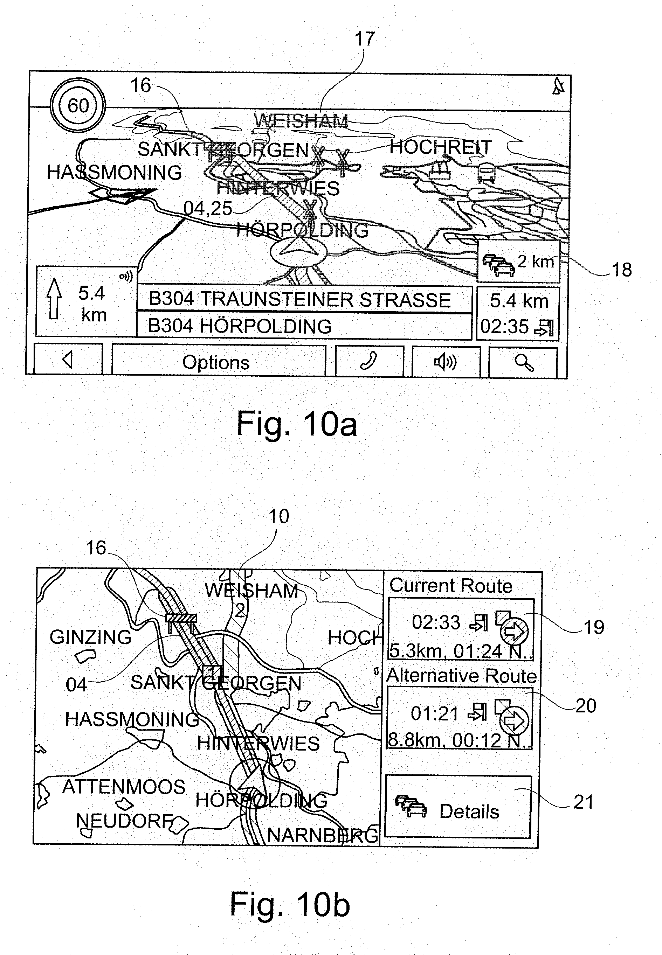

Die Fig. 10a bis 10e zeigen die Vorteile eines erfindungsgemäßen Verfahrens bei der Berücksichtigung von Verkehrsmeldungen, beispielsweise über einen RDS-TMC-Verkehrsinformationskanal. Die aus dem Stand der Technik bekannten Navigationsvorrichtungen haben in der Regel Zugriff auf Verkehrsmeldungen, die vorzugsweise nach TMC-Standard drahtlos, d.h. über das Radioband, übertragen werden. Hierzu ist in der Navigationsvorrichtung 40 ein UKW-Empfänger 48 vorgesehen, der die zyklisch gesendeten Verkehrsinformationen auslesen und dekodieren kann. Alternativ oder zusätzlich sind auch Anbindungen an drahtlose Informationsnetze, wie UMTS, GSM, HSDPA, WLAN etc., verfügbar, wobei beispielsweise eine Anbindung der Navigationsvorrichtung über Bluetooth an ein entsprechendes Empfangsgerät einer Information aus entfernten Verkehrsservern, insbesondere über das Internet, eingerichtet werden kann. In der Fig. 10a wird in einer perspektivischen 2,5D-Darstellung die vor einem Benutzer liegende Region im Umfeld einer aktuellen Route 04 dargestellt. Während der Routenführung werden über ein Verkehrsinformationsmeldesystem Verkehrsmeldungen empfangen, und es wird analysiert, ob diese auch Strecken auf der momentan befahrenen Route 04 betreffen. Durch ein Symbol eines Verkehrshindernisses/Staus 16 auf dem Routenführungsbildschirm 01 kann ein Verkehrshindernis angezeigt werden, und eine Schaltfläche 18 kann den Benutzer über ein aufgetretenes Verkehrshindernis auf der momentan befahrenen Route 04, 25 informieren. Durch Betätigung der Schaltfläche 18 wird eine erneute Routenberechnung vorzugsweise mittels einer oder mehrerer Alternativrouten 10 angestoßen, wobei der in Fig. 10b gezeigte Navigationsbildschirm dargestellt wird, in dem die zumindest eine Alternativroute sowohl grafisch als auch textuell ausgegeben wird. Die Navigationsvorrichtung hat nun eine Alternativroute 10 aufgefunden, die eine zwar längere Streckendistanz, jedoch erheblich kürzere Fahrzeit vorschlägt. Innerhalb der Schaltflächen 19, 20 kann der Benutzer nun erkennen, welche Auswirkung die Störung auf die aktuelle Route 04 hat und welche Kenndaten sich bei Berechnung der Alternativroute 10 ergeben. Da es sich bei der Störung 16 um eine Vollsperrung handelt, ist die Verzögerung erheblich, und der Nutzer wird voraussichtlich die Alternativroute 10 wählen, die in diesem Fall als Präferenzroute 39 ausgezeichnet werden kann. Bei geringem Einfluss auf die Ankunftszeit kann es von Vorteil sein, auf der ursprünglichen Route 04 zu verbleiben, und so eine potentielle zeitliche Verlängerung der Umgehungsroute durch viele Fahrzeuge, die ebenfalls die Störung umfahren möchten, zu berücksichtigen. Aus diesem Grund kann es vorteilhaft sein, wenngleich bei einer Störungsmeldung mehrere Alternativrouten berechnet werden, per se weniger attraktive Umfahrungen oder die momentan befahrene, staubehaftete Route 25 weiter angeboten zu bekommen, da zu erwarten ist, dass auf naheliegende Alternativrouten, insbesondere auf eine kurze Stauumfahrung, eine Vielzahl von Fahrzeugen ausweichen, die eine Stauumfahrungstechnologie nach dem bekannten Stand der Technik nutzen.

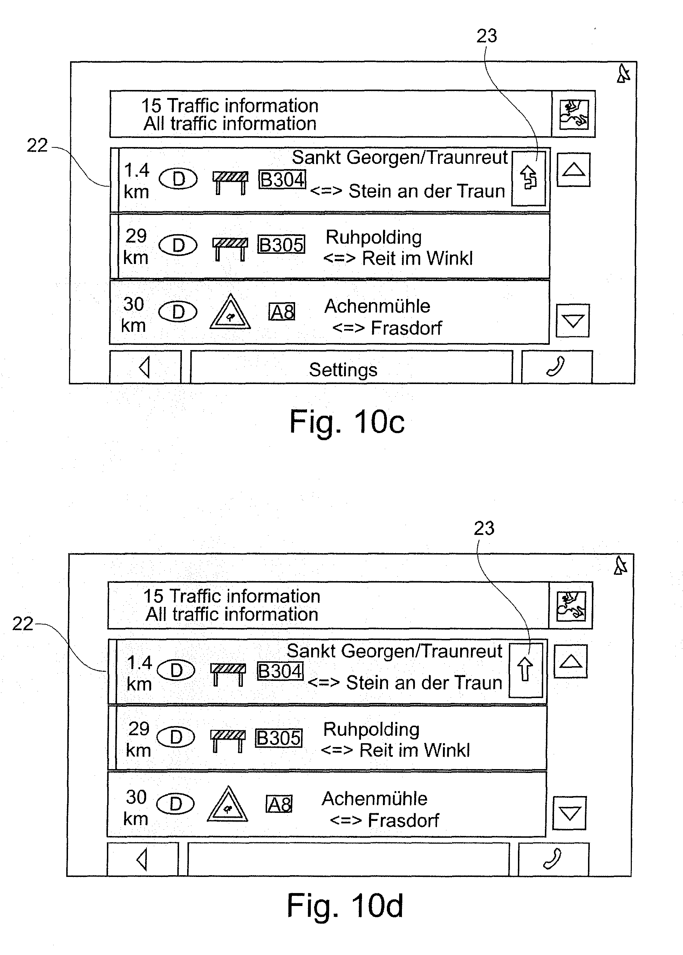

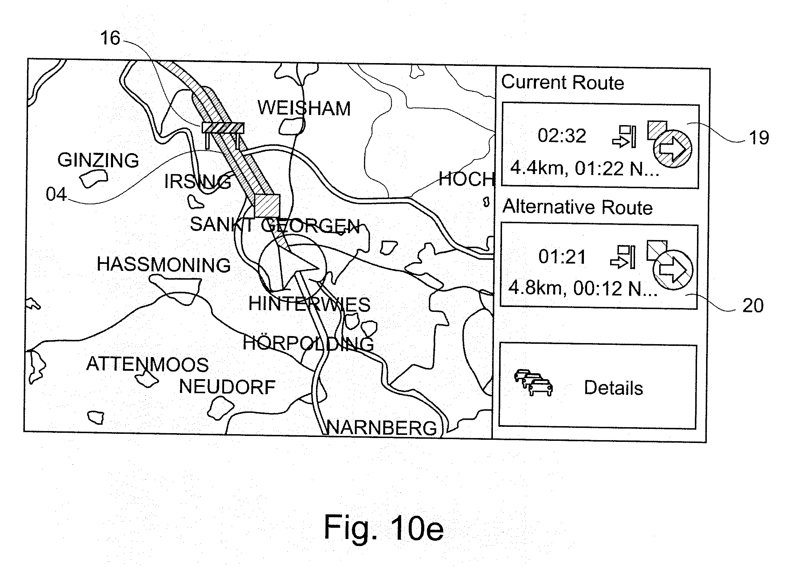

Durch Betätigung einer der Schaltflächen 19, 20 wählt der Benutzer eine Route aus, und diese wird als momentan zu befahrende Route 25 zur weiteren Navigationsführung übernommen. Zusätzlich kann der Benutzer durch Betätigung der Schaltfläche 21 Details über die Verkehrsstörungen angezeigt bekommen. In den Fig. 10c und 10d werden die Details der Störungen in Form einer Routenverlaufsliste in einem Detailmenübildschirm 22 dargestellt. Hier hat der Benutzer die Möglichkeit, die Berücksichtigung von Verkehrsmeldungen manuell zu beeinflussen. Durch Klick auf eine Verkehrshindernis-/Stauumfahrungsschaltfläche 23 hinter einer Verkehrsmeldung, in diesem Fall einer Verkehrsmeldung, die die momentan befahrene Route 25 betrifft, entscheidet der Nutzer, ob dieses Verkehrshindernis umfahren werden soll (dargestellt in Fig. 10c) oder nicht (dargestellt in Fig. 10d). Wählt der Benutzer, wie in Fig. 10b dargestellt, keine Umfahrung der Verkehrsstörung, verbleibt er auf der ursprünglichen Route 04, 25, so dass der in Fig. 10e dargestellte Navigationsführungsbildschirm dargestellt wird. Entsprechend der Auswahl des Benutzers wird keine alternative Route mehr dargestellt, sondern die ursprüngliche Route 04 führt auf die Verkehrsstörung 16 zu.

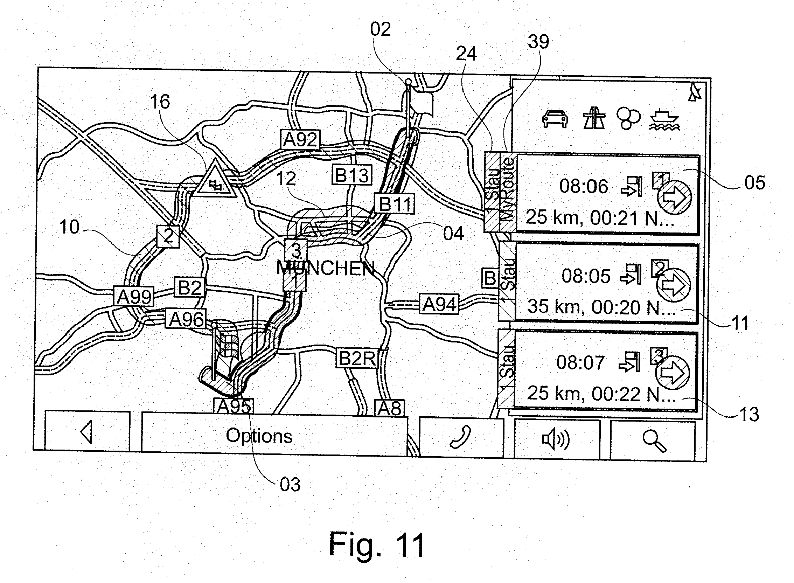

Fig. 11 zeigt in einer alternativen Darstellung zur Fig. 8 die Berechnung dreier Alternativrouten 04, 10, 12 bei Umfahrung des Großraums München. In den Infoschaltflächen 05, 11, 13 für die erste Route 04, zweite Route 10 und dritte Route 12 sind zum einen eine Kennzeichnung der Route 04 als Präferenzmarker 39 sowie Verkehrshindernis-/Stauhinweise 24 für eine Route 10 eingeblendet, die über Verkehrshindernisse 16 entlang der Route 10 informieren. Hierbei ist in dem Hinweis 24 dargestellt, wie viele Verkehrsmeldungen 16 auf der Routenalternative 10 eingegangen sind. Dadurch erhält der Benutzer ein klares Bild über die Routenverläufe und Staumeldungen 16, die die jeweilige Route betreffen, und kann eine für ihn günstige Routenentscheidung treffen.

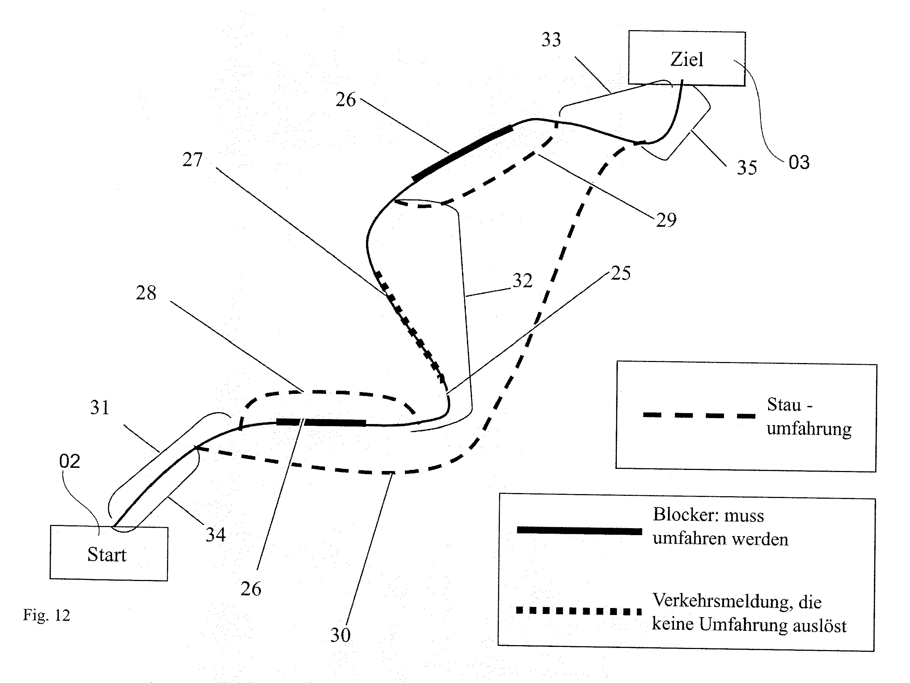

Schließlich ist in Fig. 12 schematisch ein erster Routenverlauf zwischen einer Startposition 02 und einer Zielposition 03 als dünne durchgezogene Linie dargestellt. In diesem Verfahrensbeispiel empfängt die Navigationsvorrichtung 40 mehrere Verkehrsmeldungen, welche die aktuelle befahrene Route 25 betreffen. In diesem Beispiel sind es drei Verkehrsmeldungen 26, 27. Zwei Verkehrsmeldungen 26 führen zu einer Stauumfahrung, die beispielsweise über die gestrichelten Strecken 28, 29 führen kann und eine lokale Umfahrung der betroffenen Strecken ermöglicht. Diese blockierenden Verkehrsmeldungen 26 können somit "kurz" umfahren werden. Die Verkehrsmeldung 27, die keine Umfahrung auslöst, wird nicht umfahren, was im Folgenden als Möglichkeit 1 bezeichnet wird:

In dieser Möglichkeit 1 wird das Verfahren die momentan befahrene Route 25 als aktuelle Route kennzeichnen und eine Stauumfahrungsroute erstellen, die beispielsweise über die Alternativroutenteilstrecken 31, 28, 32, 29 und 33 führen könnte. In der Berücksichtigung der fahrverhaltensabhängigen Geschwindigkeitsdaten wird eine Empfehlung für eine alternative Route berechnet.

Des Weiteren käme eine zweite Möglichkeit einer Stauumfahrung in Betracht: Diese Stauumfahrung würde über die Abschnitte 34, 30 und 35 eine weitreichende Umfahrung aller drei gemeldeten Verkehrshindernisse 26, 27 bewirken und eine konkrete Alternativroute zur momentan befahrenen Route 25 darstellen. Auch hier würde unter Berücksichtigung fahrverhaltensabhängiger Geschwindigkeitsdaten eine Stauumfahrung ermöglicht werden, die in Abhängigkeit von Tageszeit, Wochentag und Jahreszeit zu unterschiedlichen Ergebnissen führen könnte. Welche der vorgenannten Möglichkeiten von der Navigationsvorrichtung 40 dem Benutzer angeboten werden, liegt an der konkreten Implementierung und kann alternativ oder additiv durchgeführt werden, so dass kurze Umfahrungsmöglichkeiten nach Möglichkeit 1 sowie großräumige Umfahrungsrouten nach Möglichkeit 2 gleichartig behandelt werden können.

Das erfindungsgemäße Verfahren und die erfindungsgemäße Navigationsvorrichtung finden den optimalsten Weg, um einen Stau bzw. Staus oder eine Kombination von Verkehrsbehinderungen und Staus zu umfahren. Dies wird durch Belegung von Strafzuschlägen zu Strecken einer aktuellen Route ermöglicht, bei der die Routingstrategie diese Strecken vorberechneter Routen ausklammert, um bestmögliche Alternativrouten aufzufinden. Hierdurch wird das Verkehrsgeschehen entlastet, der Benutzer bedarfsgerecht informiert sowie unter Berücksichtigung historischer Fahrverhaltensdaten eine dynamische Verkehrsführung ermöglicht.

**Patentansprüche**

1. Verfahren zur Navigation eines Fahrzeugs entlang einer Route (25) von einer Startposition oder einer momentanen Position (02) zu einer Zielposition (03), wobei eine Routenberechnungseinrichtung (42) einer Navigationsvorrichtung (40) einen Routenverlauf (04, 10, 12), der sich als Sequenz mehrerer zusammenhängender, auf einer digitalen Karte (01) einer Speichereinrichtung (52) gespeicherter Strecken zusammensetzt, als eine erste Route (04) berechnet, und des Weiteren zumindest eine Alternativroute (10, 12) durch Belegung von zumindest einer Strecke der ersten Route (04) mit einem Strafzuschlag, insbesondere einer erhöhten durchschnittlichen Fahrtdauer, Streckenlänge oder Ähnlichem, berechnet, umfassend die Schritte:

   S1: Eingabe zumindest einer Zielposition (03);
   S2: Berechnung einer ersten Route (04);
   S3: Strafzuschlagsbelegung zumindest einer Strecke der ersten Route (04);
   S4: Berechnung zumindest einer weiteren Route (10, 12);
   S7: Darstellung der Routen und Auswahl einer Route (25);
   S8: Navigationsführung entlang der ausgewählten Route.

2. Verfahren nach Anspruch 1; weiterhin umfassend die Zwischenschritte:

   S5: Vergleich und Bewertung der weiteren Route (10, 12) gegenüber der vorberechneten Route (04) oder den Routen (04, 10, 12), insbesondere hinsichtlich Routendistanz (07), Fahrtdauer (08), Anzahl identischer Strecken oder Ähnlichem;
   S6: Entscheidung über Berechnung einer weiteren Route (10, 12) in Abhängigkeit des Bewertungsergebnisses, insbesondere Identität der Strecken, Routendistanz (07), Fahrtdauer (08), um ein vorbestimmbares absolutes oder relatives Maß, und/oder Entscheidung über Verwerfung der weiteren Route (10, 12) in Abhängigkeit des Bewertungsergebnisses, wobei insbesondere der Strafzuschlag für eine weitere Routenberechnung angepasst wird, insbesondere, bis eine vorbestimmbare Anzahl von Routen (04, 10, 12), bevorzugt drei Routen, berechnet worden ist.

3. Verfahren nach einem der vorgenannten Ansprüche, wobei bei der Berechnung und/oder Bewertung einer Route (04, 10, 12) das individuelle Fahrverhalten, insbesondere tageszeitbezogene Fahrverhalten, eines Benutzers und/oder einer Gruppe von Benutzern hinsichtlich einzelner Strecken und/oder Streckentypen berücksichtigt wird.

4. Verfahren nach einem der vorgenannten Ansprüche, wobei der Strafzuschlag zumindest für einzelne Streckentypen, wie Autobahn, Schnellstraße, Landstraße, Wohnstraße oder Ähnliches, insbesondere für einzelne Strecken einer Route (04, 10, 12), angepasst bestimmbar ist, und/oder der Strafzuschlag für einzelne Streckentypen oder einzelne Strecken durch das individuelle Fahrverhalten eines Benutzers und/oder einer Gruppe von Benutzern bestimmbar ist.

5. Verfahren nach Anspruch 4, wobei der Strafzuschlag jeder Strecke in Abhängigkeit von der Entfernung von der Start- und/oder Zielposition (03), und/oder in Abhängigkeit der Streckentypenstruktur einer Route (04, 10, 12) bestimmbar ist.

6. Verfahren nach einem der vorgenannten Ansprüche, wobei die Routenverlaufsdarstellung (04, 10, 12) grafische, insbesondere farbige, Routenverlaufsmarkierungen sowie bei überlappenden Strecken unterscheidbare Routenmarkierungen, insbesondere unterschiedliche Routendarstellungsbreiten, umfasst und/oder eine textuelle Darstellung der Routen (04, 10, 12) wesentliche Routenbewertungsinformationen, insbesondere Routendistanz (07), Fahrtdauer (08), Ankunftszeit (06), Streckentypen und/oder Verkehrsstatusinformationen, umfasst.

7. Verfahren nach einem der vorgenannten Ansprüche, wobei Informationen über Staus/Verkehrshindernisse (16) über ein Verkehrsnachrichtensystem, insbesondere RDS-TMC, GSM, GPRS, UMTS, HSDPA, WLAN, WiMax oder Ähnliches, für jede berechnete Route (04, 10, 12) empfangen, routenspezifisch dargestellt und bei der Strafzuschlagsbestimmung und/oder Bewertung der Route (04, 10, 12), insbesondere als Zeitverlustwert oder Sperrung einer Strecke der Route einbezogen werden.

8. Verfahren nach Anspruch 7, wobei bei Empfang einer Verkehrsnachricht bezüglich der momentanen Route (25) und ausgehend von der momentanen Position (02) weitere Routen (10, 12) zur Umfahrung des Staus/Verkehrshindernisses (16) berechnet werden, wobei des Weiteren die momentane Route (25) als einer der Alternativrouten (04, 10, 12) dargestellt wird.

9. Verfahren nach einem der vorgenannten Ansprüche, wobei bei der Darstellung der berechneten Routen (04, 10, 12) eine hinsichtlich eines Präferenzkriteriums ausgezeichnete Route (39), insbesondere distanz- oder fahrzeitoptimierte Route, als Präferenzroute (39) empfohlen wird, wobei insbesondere bei der Auswahl der Route (04, 10, 12) die Präferenzroute (39) nach einer vorbestimmbaren Auswahlzeit, in der keine Auswahl durch den Benutzer erfolgt, als momentane Route (25) ausgewählt wird.

10. Navigationsvorrichtung (01) zur Durchführung eines Verfahrens nach einem der vorangegangenen Verfahrensansprüche, umfassend
eine Eingabeeinrichtung (44) zur Eingabe zumindest einer Zielposition (03) einer Navigation;
eine Positionsermittlungseinrichtung (50) zur Ermittlung einer momentanen Position (02) des Fahrzeugs;
eine Speichereinrichtung (52) zur Speicherung von zumindest Streckenverläufen einer digitalen Karte (01) und berechneten Routen (04, 10, 12);
eine Routenberechnungseinrichtung (42) zur Berechnung einer Route (04, 10, 12) zwischen einer Startposition oder einer momentanen Position (02) und einer Zielposition (03), insbesondere unter der Vorgabe einer Routenberechnungsbedingung wie fahrzeit- oder distanzoptimierte Route oder Ähnliches;
eine Navigationsführungseinrichtung (66) zur kontinuierlichen Bestimmung von Navigationsanweisungen während der Fahrt des Fahrzeugs entlang einer ausgewählten Route (25);
eine Ausgabeeinrichtung (64) zur Ausgabe einer Darstellung zumindest zweier Routen (04, 10, 12) und zur Ausgabe von Navigationsanweisungen;
eine Strafzuschlagseinrichtung (60) zur Beaufschlagung zumindest einer Strecke zumindest einer vorberechneten Route (04, 10, 12) mit Strafattributen wie zusätzliche Streckenlänge oder zusätzliche Fahrtdauer;
wobei die Routenberechnungseinrichtung (42) ausgelegt ist, zumindest zwei Routen (04, 10, 12) zwischen Startposition oder momentaner Position (02) und Zielposition (03) unter Berücksichtigung der Routenberechnungsbedingung zu berechnen und die Strafzuschlagseinrichtung (60) ausgelegt ist, nach Berechnung einer ersten Route (04) zumindest einzelne Strecken der ersten Route (04) mit Strafzuschlägen zu belegen, so dass in einer weiteren Routenberechnung eine Alternativroute (10, 12) berechnet werden kann.

11. Vorrichtung nach Anspruch 10, weiterhin umfassend eine Routenbewertungseinrichtung (62) zur Bewertung von Eigenschaften der vorberechneten Route (04) oder Routen (04, 10, 12), insbesondere hinsichtlich Routendistanz (07), Fahrtdauer (08), Anzahl identischer Strecken oder Ähnlichem, wobei die Strafzuschlagseinrichtung (60) eingerichtet ist, auf Grundlage eines Bewertungsergebnisses der Routenbewertungseinrichtung (62) zumindest einzelne Strecken der vorberechneten Routen (04, 10, 12) mit geänderten Strafzuschlägen zu belegen.

12. Vorrichtung nach Anspruch 10 oder 11 und einem Verfahren nach Anspruch 9, wobei die Eingabeeinrichtung (46) ein Auswahlmittel zur Auswahl einer Route (04, 10, 12) und ein Zeitgebermittel zur automatischen Auswahl der Präferenzroute (39) umfasst.

13. Vorrichtung nach einem der Ansprüche 10 bis 12, wobei die Speichereinrichtung (52) des Weiteren einen Streckenfahrprofilspeicher (58) zur Speicherung eines individuellen Fahrverhaltens, insbesondere eines tageszeitbezogenen Fahrverhaltes eines Benutzers und/oder einer Gruppe von Benutzern, auf zumindest einer Strecke umfasst, wobei insbesondere während einer Fahrt das Fahrverhalten entlang einer Strecke aufgezeichnet und im Streckenprofilspeicher (58) abgelegt werden kann, sowie bei Planung einer Route ein streckenbezogenes Fahrverhalten aus dem Streckenprofilspeicher (58) abgerufen werden kann.

14. Vorrichtung nach Anspruch 13, wobei die Vorrichtung des Weiteren eine Kommunikationseinrichtung (70) zur drahtlosen oder drahtgebundenen Kommunikation eines individuellen Fahrverhaltens und/oder Fahrverhaltens einer Gruppe von Benutzern auf zumindest einer Strecke zwischen Streckenprofilspeicher (52) und einem Fahrverhaltensserver umfasst, insbesondere drahtlos über GSM, GPRS, UMTS, HSDPA, WLAN, WiMax oder drahtgebunden über LAN, Internet, USB oder Ähnliches.

40

Routen
speicher

56

Kartenspeicher

54

Streckenfahrprofilspeicher

58

52

46

48

44

Eingabeeinrichtung

70

Routenberechnungseinrichtung

66

42

Navigationsführungseinrichtung

68

Strafzuschlagseinrichtung

60

GPS-
Modul

50

Routenvorschläge

● R1: 39km, 00:26 Min

○ R2: 46km, 00:27 Min

○ R3: 40km, 00:32 Min

64

Routenbewertungseinrichtung

62

Fig. 1

```
                          ┌──────────────┐
                          │    Start     │
                          └──────┬───────┘
                                 ↓
              ┌──────────────────────────────────────┐
              │  S1:   Eingabe von Start-             │
              │        und Zielposition               │
              └──────────────────┬───────────────────┘
                                 ↓
              ┌──────────────────────────────────────┐
              │  S2:  Routenberechnung einer          │
              │       ersten Route                    │
              └──────────────────┬───────────────────┘
                                 ↓
              ┌──────────────────────────────────────┐
              │  S3: Strafzuschlagbelegung der        │
              │  vorberechneten Route oder Routen     │
              └──────────────────┬───────────────────┘
                                 ↓
              ┌──────────────────────────────────────┐
              │  S4:   Routenberechnung einer         │
              │        weiteren Route                 │
              └──────────────────┬───────────────────┘
                                 ↓
              ┌──────────────────────────────────────┐
              │  S5:  Bewertung der weiteren          │
              │       Route bezüglich der             │
              │  vorberechneten Route oder Routen     │
              └──────────────────┬───────────────────┘
                                 ↓
                    ◇ S6:  Weitere Route berechnen ?  ──── ja
                                 │
                                nein
                                 ↓
              ┌──────────────────────────────────────┐
              │  S7:  Darstellung der Routen          │
              │       und Auswahl durch Benutzer      │
              └──────────────────┬───────────────────┘
                                 ↓
              ┌──────────────────────────────────────┐
              │  S8: Navigation entlang der           │
              │      ausgewählten Route               │
              └──────────────────┬───────────────────┘
                                 ↓
                          ┌──────────────┐
                          │     Ende     │
                          └──────────────┘
```

Fig. 2

Fig. 3

EP 2 224 211 A1

Fig. 4

Fig. 5

Fig. 6

14

| | Turn-by-Turn List |
| --- | --- |
| | Simulation |
| | Route Profile |
| | Settings |

| GPS Status | Traffic | SOS Direct Help |
| --- | --- | --- |

| Options |
| --- |

## Fig. 7a

15

NEW Choose route to simulate:

| | NEW Original Route | △ |
| --- | --- | --- |
| | NEW Alternative Route 1 | |
| | NEW Alternative Route 2 | |
| | | ▽ |

| Cancel |
| --- |

## Fig. 7b

Fig. 8

EP 2 224 211 A1

Fig. 9a

Fig. 9b

## Fig. 10a

## Fig. 10b

23

| 15 Traffic information | | | | |
| All traffic information | | | | |

22

| 1.4 km | (D) | 🚧 | B304 | Sankt Georgen/Traunreut <=> Stein an der Traun | ⇑ |
| 29 km | (D) | 🚧 | B305 | Ruhpolding <=> Reit im Winkl | |
| 30 km | (D) | ⚠ | A8 | Achenmühle <=> Frasdorf | |

◁ | Settings | ♪

## Fig. 10c

23

| 15 Traffic information | | | | |
| All traffic information | | | | |

22

| 1.4 km | (D) | 🚧 | B304 | Sankt Georgen/Traunreut <=> Stein an der Traun | ⇑ |
| 29 km | (D) | 🚧 | B305 | Ruhpolding <=> Reit im Winkl | |
| 30 km | (D) | ⚠ | A8 | Achenmühle <=> Frasdorf | |

◁ | | ♪

## Fig. 10d

Fig. 10e

EP 2 224 211 A1

Fig. 11

EP 2 224 211 A1

EP 2 224 211 A1

Fig. 12

Ziel

03

33

35

29

26

27

32

25

28

Stau - umfahrung

31

02

34

Start

26

30

Blocker: muss umfahren werden

Verkehrsmeldung, die keine Umfahrung auslöst

| Europäisches Patentamt European Patent Office Office européen des brevets | **EUROPÄISCHER RECHERCHENBERICHT** | **Nummer der Anmeldung** EP 10 15 3405 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y<br>A | US 2004/088106 A1 (OMI MASANORI [JP]) 6. Mai 2004 (2004-05-06)<br>* Zusammenfassung *<br>* Abbildungen 1-3, 7-9,11 *<br>* Absätze [0002], [0008], [0010], [0011], [0013], [0040] - [0048], [0051], [0054] - [0056], [0058], [0064], [0067], [0069], [0073] *<br>* Ansprüche 1-5,7,15 *<br>----- | 1,4-6,9, 10,12<br>2,3,7,8, 11,13<br>14 | INV.<br>G01C21/34<br>G08G1/0968 |
| Y<br>A | US 2002/143464 A1 (BLEWITT RONALD L [US] BLEWITT RONAL L [US]) 3. Oktober 2002 (2002-10-03)<br>* Zusammenfassung *<br>* Abbildung 1 *<br>* Spalte 2, Zeile 5 - Spalte 4, Zeile 59 *<br>* Ansprüche 1-6 *<br>----- | 2,11<br>1,3, 6-10, 12-14 | |
| Y | DE 10 2006 030271 A1 (DENSO IT LAB INC [JP]; DENSO CORP [JP]) 11. Januar 2007 (2007-01-11)<br>* Zusammenfassung *<br>* Absätze [0005], [0006], [0008] - [0010], [0015], [0033] - [0035], [0042], [0044], [0066], [0067], [0089], [0071], [0077] *<br>* Anspruch 1 *<br>* Abbildungen 1,2 *<br>----- | 3,7,8,13 | **RECHERCHIERTE SACHGEBIETE (IPC)**<br>G01C<br>G08G |
| A | DE 602 22 968 T2 (ALPINE ELECTRONICS INC [JP]) 28. August 2008 (2008-08-28)<br>* Absätze [0001], [0014] - [0016], [0020] - [0025], [0064], [0065] *<br>* Ansprüche 1-3 *<br>* Abbildungen 1,2,4 *<br>----- | 1-14 | |

Der vorliegende Recherchenbericht wurde für alle Patentansprüche erstellt

| Recherchenort | Abschlußdatum der Recherche | Prüfer |
|---|---|---|
| Den Haag | 11. Juni 2010 | Quartier, Frank |

**ANHANG ZUM EUROPÄISCHEN RECHERCHENBERICHT
ÜBER DIE EUROPÄISCHE PATENTANMELDUNG NR.**

EP 10 15 3405

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-06-2010

| Im Recherchenbericht angeführtes Patentdokument | Datum der Veröffentlichung | Mitglied(er) der Patentfamilie | Datum der Veröffentlichung |
|---|---|---|---|
| US 2004088106 A1 | 06-05-2004 | JP 3722108 B2<br>JP 2004156913 A | 30-11-2005<br>03-06-2004 |
| US 2002143464 A1 | 03-10-2002 | KEINE | |
| DE 102006030271 A1 | 11-01-2007 | JP 2007010571 A<br>US 2007005240 A1 | 18-01-2007<br>04-01-2007 |
| DE 60222968 T2 | 28-08-2008 | EP 1282096 A2<br>JP 2003035547 A<br>US 2003028320 A1 | 05-02-2003<br>07-02-2003<br>06-02-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0645603 A1
- EP 1172631 A1